(19) Europäisches Patentamt / European Patent Office / Office européen des brevets

(11) **EP 4 583 453 A1**

(12) **EUROPEAN PATENT APPLICATION**
published in accordance with Art. 153(4) EPC

(43) Date of publication:
**09.07.2025 Bulletin 2025/28**

(21) Application number: **23873292.9**

(22) Date of filing: **04.10.2023**

(51) International Patent Classification (IPC):
**H04L 5/14** (2006.01)  **H04L 5/00** (2006.01)
**H04W 72/04** (2023.01)  **H04W 72/23** (2023.01)
**H04W 72/542** (2023.01)  **H04W 72/53** (2023.01)
**H04W 72/12** (2023.01)

(52) Cooperative Patent Classification (CPC):
**H04L 5/00; H04L 5/14; H04W 72/04; H04W 72/12;**
**H04W 72/23; H04W 72/53; H04W 72/542**

(86) International application number:
**PCT/KR2023/015220**

(87) International publication number:
**WO 2024/072185 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.09.2022 KR 20220125787
05.11.2022 KR 20220146613

(71) Applicant: **Wilus Institute of Standards and Technology Inc.**
**Seongnam-si, Gyeonggi-do 13595 (KR)**

(72) Inventors:
• **SEOK, Geunyoung**
  **Seongnam-si, Gyeonggi-do 13595 (KR)**
• **NOH, Minseok**
  **Seongnam-si, Gyeonggi-do 13595 (KR)**
• **YOON, Youngjoon**
  **Seongnam-si, Gyeonggi-do 13595 (KR)**
• **SON, Juhyung**
  **Seongnam-si, Gyeonggi-do 13595 (KR)**
• **KWAK, Jinsam**
  **Seongnam-si, Gyeonggi-do 13595 (KR)**

(74) Representative: **Metroconsult Srl**
**Via Sestriere, 100**
**10060 None (TO) (IT)**

(54) **METHOD AND DEVICE FOR TRANSMITTING SIGNAL IN WIRELESS COMMUNICATION SYSTEM**

(57) The present invention relates to a wireless communication system and, particularly, to a method and a wireless device therefor, the method comprising the steps of: receiving a cell-specific RRC signal regarding a slot format, wherein the slot format includes information on a type of symbol, and the type of symbol includes at least one of a DI symbol, a flexible symbol, and a UL symbol; determining whether an RO in a PRACH slot is valid, wherein the determining includes determining whether the RO is valid on the basis of whether the RO starts from at least $N_{gap}$ symbol after the last DI symbol; and performing UL transmission or DL reception on the basis of whether the RO is valid.

| Slot #m-1 | PRACH slot #m | PRACH slot #q |
|---|---|---|
| D symbols** | D symbols* | U symbols** |
| | D | |
| | Valid RO  U | Valid RO |
| | D | |

$N_{gap}$ symbols

*: Subband symbols
**: Non-subband symbols
D/U: Configured by common TDD configuration

**FIG. 18**

## Description

## Technical Field

The disclosure relates to a wireless communication system. Particularly, the disclosure relates to a method of transmitting a signal in a wireless communication system, and a device using the same.

## Background Art

After commercialization of 4th generation (4G) communication system, in order to meet the increasing demand for wireless data traffic, efforts are being made to develop new 5th generation (5G) communication systems. The 5G communication system is called as a beyond 4G network communication system, a post LTE system, or a new radio (NR) system. In order to achieve a high data transfer rate, 5G communication systems include systems operated using the millimeter wave (mmWave) band of 6 GHz or more, and include a communication system operated using a frequency band of 6 GHz or less in terms of ensuring coverage so that implementations in base stations and terminals are under consideration.

A 3rd generation partnership project (3GPP) NR system enhances spectral efficiency of a network and enables a communication provider to provide more data and voice services over a given bandwidth. Accordingly, the 3GPP NR system is designed to meet the demands for high-speed data and media transmission in addition to supports for large volumes of voice. The advantages of the NR system are to have a higher throughput and a lower latency in an identical platform, support for frequency division duplex (FDD) and time division duplex (TDD), and a low operation cost with an enhanced end-user environment and a simple architecture.

For more efficient data processing, dynamic TDD of the NR system may use a method for varying the number of orthogonal frequency division multiplexing (OFDM) symbols that may be used in an uplink and downlink according to data traffic directions of cell users. For example, when the downlink traffic of the cell is larger than the uplink traffic, the base station may allocate a plurality of downlink OFDM symbols to a slot (or subframe). Information about the slot configuration should be transmitted to the terminals.

In order to alleviate the path loss of radio waves and increase the transmission distance of radio waves in the mmWave band, in 5G communication systems, beamforming, massive multiple input/output (massive MIMO), full dimensional MIMO (FD-MIMO), array antenna, analog beam-forming, hybrid beamforming that combines analog beamforming and digital beamforming, and large scale antenna technologies are discussed. In addition, for network improvement of the system, in the 5G communication system, technology developments related to evolved small cells, advanced small cells, cloud radio access network (cloud RAN), ultra-dense network, device to device communication (D2D), vehicle to everything communication (V2X), wireless backhaul, non-terrestrial network communication (NTN), moving network, cooperative communication, coordinated multi-points (CoMP), interference cancellation, and the like are being made. In addition, in the 5G system, hybrid FSK and QAM modulation (FQAM) and sliding window superposition coding (SWSC), which are advanced coding modulation (ACM) schemes, and filter bank multi-carrier (FBMC), non-orthogonal multiple access (NOMA), and sparse code multiple access (SCMA), which are advanced connectivity technologies, are being developed.

Meanwhile, in a human-centric connection network where humans generate and consume information, the Internet has evolved into the Internet of Things (IoT) network, which exchanges information among distributed components such as objects. Internet of Everything (IoE) technology, which combines IoT technology with big data processing technology through connection with cloud servers, is also emerging. In order to implement IoT, technology elements such as sensing technology, wired/wireless communication and network infrastructure, service interface technology, and security technology are required, so that in recent years, technologies such as sensor network, machine to machine (M2M), and machine type communication (MTC) have been studied for connection between objects. In the IoT environment, an intelligent internet technology (IT) service that collects and analyzes data generated from connected objects to create new value in human life can be provided. Through the fusion and mixture of existing information technology (IT) and various industries, IoT can be applied to fields such as smart home, smart building, smart city, smart car or connected car, smart grid, healthcare, smart home appliance, and advanced medical service.

Accordingly, various attempts have been made to apply the 5G communication system to the IoT network. For example, technologies such as a sensor network, a machine to machine (M2M), and a machine type communication (MTC) are implemented by techniques such as beamforming, MIMO, and array antennas. The application of the cloud RAN as the big data processing technology described above is an example of the fusion of 5G technology and IoT technology. Generally, a mobile communication system has been developed to provide voice service while ensuring the user's activity.

However, the mobile communication system is gradually expanding not only the voice but also the data service, and now it has developed to the extent of providing high-speed data service. However, in a mobile communication system in which services are currently being provided, a more advanced mobile communication system is required due to a shortage phenomenon of resources and a high-speed service demand of users.

## Disclosure of Invention

## Technical Problem

An aspect of the present disclosure is to provide a method for efficiently transmitting a signal in a wireless communication system and a device using the same. Specifically, an aspect of the present disclosure is to provide a method for determining a valid RO in a wireless communication system and a device using the same. Furthermore, an aspect of the present disclosure is to provide a method for transmitting and receiving signals based on a valid RO and a device using the same.

## Solution to Problem

One aspect of the present disclosure provides a UE used in a wireless communication system, the UE including: a communication module; and a processor configured to control the communication module, wherein the processor is configured to: receive a cell-specific (cell-common) radio resource control (RRC) signal regarding a slot format, the slot format including information about a type of symbol, and the type of symbol including at least one of a downlink (DL) symbol, a flexible symbol, and an uplink (UL) symbol; determine whether a RACH occasion (RO) in a physical random access channel (PRACH) slot is valid, the determination including determining whether the RO is valid based on whether the RO starts at least $N_{gap}$ symbols after a last DL symbol; and perform UL transmission or DL reception based on whether the RO is valid, wherein in at least one slot, multiple subbands are configured within one frequency band, the multiple subbands including a DL subband and a UL subband, and in case that the RO is present in the UL subband, the last DL symbol is determined based on DL symbols configured by the cell-specific RRC signal, excluding symbols in which the UL subband is configured.

In another aspect of the present disclosure, a method used by a UE in a wireless communication system may include: receiving a cell-specific (cell-common) radio resource control (RRC) signal regarding a slot format, the slot format including information about a type of symbol, and the type of symbol including at least one of a downlink (DL) symbol, a flexible symbol, and an uplink (UL) symbol; determining whether an RACH occasion (RO) in a physical random access channel (PRACH) slot is valid, the determination including determining whether the RO is valid based on whether the RO starts at least $N_{gap}$ symbols after a last DL symbol; and performing UL transmission or DL reception based on whether the RO is valid, wherein in at least one slot, multiple subbands are configured within one frequency band, the multiple subbands including a DL subband and a UL subband, and in case that the RO is present in the UL subband, the last DL symbol is determined based on DL symbols configured by the cell-specific RRC signal, excluding symbols in which the UL subband is configured.

Preferably, the cell-specific RRC signal may include common time division duplex (TDD) UL-DL configuration information.

Preferably, the determination may include determining that the RO is valid in case that the RO is within the UL subband, the RO does not precede a synchronization signal/physical broadcast channel (SS/PBCH) block within the PRACH slot in a time domain, starts at least $N_{gap}$ symbols after the last DL symbol, and starts at least $N_{gap}$ symbols after a last SS/PBCH block reception symbol.

Preferably, the determination may include determining that the RO is valid in case that the RO is present on a UL symbol set configured by the cell-specific RRC signal.

Preferably, $N_{gap}$ may be determined as follows based on subcarrier spacing (SCS) of the PRACH: in case that the SCS of the PRACH is 1.25 kHz or 5 kHz, $N_{gap} = 0$; and in case that the SCS of the PRACH is 15 kHz, 30 kHz, 60 kHz, or 120 kHz, $N_{gap} = 2$.

Preferably, the PRACH may be transmitted in the RO in case that the RO is valid.

Preferably, in case that (a) the RO is present on the UL subband, (b) the RO is valid, and (c) a physical downlink shared channel (PDSCH) scheduled for the UE overlaps at least one of the $N_{gap}$ symbols and the RO in the time domain, reception of the PDSCH is determined based on whether the PDSCH has been scheduled by downlink control information (DCI) or a higher layer (e.g., RRC). Here, resources that overlaps in the time domain may include at least one symbol.

Preferably, in case that (a) the RO is present on the UL subband, (b) the RO is valid, (c) a physical downlink shared channel (PDSCH) scheduled for the UE overlaps at least one of the $N_{gap}$ symbols and the RO in the time domain, and (d) the PDSCH is scheduled by the DCI, the PDSCH may be received normally, and PRACH transmission may not be allowed in the RO.

Preferably, in case that (a) the RO is present on the UL subband, (b) the RO is valid, (c) a PDSCH scheduled for the UE overlaps at least one of the $N_{gap}$ symbols and the RO in the time domain, and (d) the PDSCH is scheduled by the higher layer (e.g., RRC), the PDSCH may be rate-matched and received based on overlapping resources in the time domain, and PRACH transmission may be allowed in the RO. Here, the overlapping resources in the time domain may include at least one symbol. In addition, the PDSCH scheduled by the higher layer may include a semi-static persistent scheduling (SPS) PDSCH.

**Advantageous Effects of Invention**

The present disclosure provides a method for efficiently transmitting a signal in a wireless communication system and a device using the same. Furthermore, the present disclosure provides a method for determining a valid RO in a wireless communication system and a device using the same. Furthermore, the present disclosure provides a method for transmitting and receiving signals based on a valid RO and a device using the same
The effects that can be obtained from the disclosure are not limited to the effects mentioned above, and other effects that are not mentioned will be clearly understood by those skilled in the art to which the disclosure belongs from the description below.

**Brief Description of Drawings**

FIG. 1 illustrates an example of a wireless frame structure used in a wireless communication system.
FIG. 2 illustrates an example of a downlink (DL)/uplink (UL) slot structure in a wireless communication system.
FIG. 3 is a diagram for explaining a physical channel used in a 3GPP system and a typical signal transmission method using the physical channel.
FIG. 4 illustrates an SS/PBCH block for initial cell access in a 3GPP NR system.
FIG 5a and Fig 5b illustrate a procedure for transmitting control information and a control channel in a 3GPP NR system.
FIG. 6 illustrates a control resource set (CORESET) in which a physical downlink control channel (PDCCH) may be transmitted in a 3GPP NR system.
FIG. 7 illustrates a method for configuring a PDCCH search space in a 3GPP NR system.
FIG. 8 is a conceptual diagram illustrating carrier aggregation.
FIG. 9 is a diagram for explaining single carrier communication and multiple carrier communication.
FIG. 10 is a diagram showing an example in which a cross carrier scheduling technique is applied.
FIG. 11 is a block diagram showing the configurations of a UE and a base station according to an embodiment of the present disclosure.
FIGS. 12 to 13 illustrate a subband configuration method.
FIG. 14 illustrates a RACH occasion (RO) in a slot.
FIGS. 15 to 19 illustrate a method for determining a valid RO according to an example of the present disclosure.
FIGS. 20 to 23 illustrate signal transmission and reception according to an example of the present disclosure.

**Mode for Carrying out the Invention**

Terms used in the specification adopt general terms which are currently widely used as possible by considering functions in the present disclosure, but the terms may be changed depending on an intention of those skilled in the art, customs, and emergence of new technology. Further, in a specific case, there is a term arbitrarily selected by an applicant and in this case, a meaning thereof will be described in a corresponding description part of the present disclosure. Accordingly, it intends to be revealed that a term used in the specification should be analyzed based on not just a name of the term but a substantial meaning of the term and contents throughout the specification.
Throughout this specification and the claims that follow, when it is described that an element is "connected" to another element, the element may be "directly connected" to the other element or "electrically connected" to the other element through a third element. Further, unless explicitly described to the contrary, the word "comprise" will be understood to imply the inclusion of stated elements but not the exclusion of any other elements unless otherwise stated. Moreover, limitations such as "more than or equal to" or "less than or equal to" based on a specific threshold may be appropriately substituted with "more than" or "less than", respectively, in some exemplary embodiments.
The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), and the like. The CDMA may be implemented by a wireless technology such as universal terrestrial radio access (UTRA) or CDMA2000. The TDMA may be implemented by a wireless technology such as global system for mobile communications (GSM)/general packet radio service (GPRS)/enhanced data rates for GSM evolution (EDGE). The OFDMA may be implemented by a wireless technology such as IEEE 802.11(Wi-Fi), IEEE 802.16(WiMAX), IEEE 802-20, evolved UTRA (E-UTRA), and the like. The UTRA is a part of a universal mobile telecommunication system (UMTS). 3rd generation partnership project (3GPP) long term evolution (LTE) is a part of an evolved UMTS (E-UMTS) using evolved-UMTS terrestrial radio access (E-UTRA) and LTE-advanced (A) is an evolved version of the 3GPP LTE. 3GPP new radio (NR) is a system designed separately from LTE/LTE-A, and is a system for supporting enhanced mobile broadband (eMBB), ultra-reliable and low latency communication (URLLC), and massive machine type communication (mMTC) services, which are requirements of IMT-2020. For the clear description, 3GPP NR is mainly described, but the technical idea of the present disclosure is not limited thereto.

Unless otherwise specified in this specification, a base station may refer to a next generation node B (gNB) as defined in 3GPP NR. Furthermore, unless otherwise specified, a terminal may refer to a user equipment (UE). Hereinafter, in order to facilitate understanding of the description, each content is separately divided into embodiments and described, but each of the embodiments may be used in combination with each other. In the present disclosure, the configuration of the UE may indicate configuration by the base station. Specifically, the base station may transmit a channel or signal to the UE to configure an operation of the UE or a parameter value used in a wireless communication system.

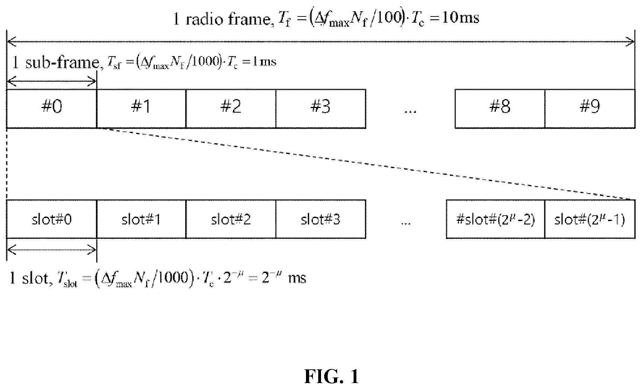

FIG. 1 illustrates an example of a wireless frame structure used in a wireless communication system.

Referring to FIG. 1, the wireless frame (or radio frame) used in the 3GPP NR system may have a length of 10 ms ($\Delta_{fmax}N_f$ / 100) * $T_c$). In addition, the wireless frame includes 10 subframes (SFs) having equal sizes. Herein, $\Delta f_{max}$ =480*10$^3$ Hz, $N_f$=4096, $T_c$=1/($\Delta f_{ref}$*$N_{f,ref}$), $\Delta f_{ref}$=15*10$^3$ Hz, and $N_{f,ref}$=2048. Numbers from 0 to 9 may be respectively allocated to 10 subframes within one subframe. Each subframe has a length of 1 ms and may include one or more slots according to a subcarrier spacing. More specifically, in the 3GPP NR system, the subcarrier spacing that may be used is 15*2$^\mu$ kHz, and $\mu$ can have a value of $\mu$ = 0~4 as subcarrier spacing configuration. That is, 15 kHz, 30 kHz, 60 kHz, 120 kHz and 240 kHz may be used for subcarrier spacing. One subframe having a length of 1 ms may include 2$^\mu$ slots. In this case, the length of each slot is 2$^{-\mu}$ ms. Numbers from 0 to 2$^\mu$-1 may be respectively allocated to 2$^\mu$ slots within one wireless frame. In addition, numbers from 0 to 10*2$^\mu$-1 may be respectively allocated to slots within one subframe. The time resource may be distinguished by at least one of a wireless frame number (also referred to as a wireless frame index), a subframe number (also referred to as a subframe number), and a slot number (or a slot index).

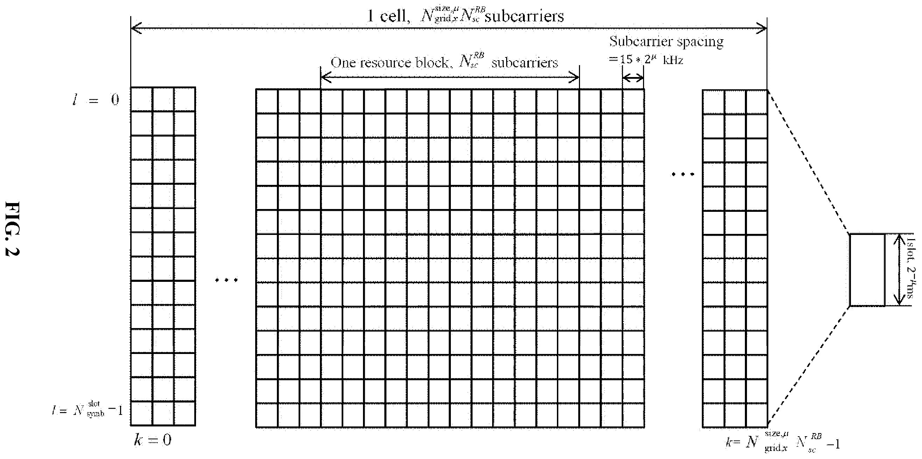

FIG. 2 illustrates an example of a downlink (DL)/uplink (UL) slot structure in a wireless communication system. In particular, FIG. 2 shows the structure of the resource grid of the 3GPP NR system.

There is one resource grid per antenna port. Referring to FIG. 2, a slot includes a plurality of orthogonal frequency division multiplexing (OFDM) symbols in a time domain and includes a plurality of resource blocks (RBs) in a frequency domain. An OFDM symbol also means one symbol section. Unless otherwise specified, OFDM symbols may be referred to simply as symbols. One RB includes 12 consecutive subcarriers in the frequency domain. Referring to FIG. 2, a signal transmitted from each slot may be represented by a resource grid including $N^{size,\mu}_{grid,x}$ * $N^{RB}_{sc}$ subcarriers, and $N^{slot}_{symb}$ OFDM symbols. Here, x = DL when the signal is a DL signal, and x = UL when the signal is an UL signal. $N^{size,\mu}_{grid,x}$ represents the number of resource blocks (RBs) according to the subcarrier spacing constituent $\mu$ (x is DL or UL), and $N^{slot}_{symb}$ represents the number of OFDM symbols in a slot. $N^{RB}_{sc}$ is the number of subcarriers constituting one RB and $N^{RB}_{sc}$ = 12. An OFDM symbol may be referred to as a cyclic shift OFDM (CP-OFDM) symbol or a discrete Fourier transform spread OFDM (DFT-s-OFDM) symbol according to a multiple access scheme.

The number of OFDM symbols included in one slot may vary according to the length of a cyclic prefix (CP). For example, in the case of a normal CP, one slot includes 14 OFDM symbols, but in the case of an extended CP, one slot may include 12 OFDM symbols. In a specific embodiment, the extended CP can only be used at 60 kHz subcarrier spacing. In FIG. 2, for convenience of description, one slot is configured with 14 OFDM symbols by way of example, but embodiments of the present disclosure may be applied in a similar manner to a slot having a different number of OFDM symbols. Referring to FIG. 2, each OFDM symbol includes $N^{size,\mu}_{grid,x}$* $N^{RB}_{sc}$ subcarriers in the frequency domain. The type of subcarrier may be divided into a data subcarrier for data transmission, a reference signal subcarrier for transmission of a reference signal, and a guard band. The carrier frequency is also referred to as the center frequency (fc).

One RB may be defined by $N^{RB}_{sc}$ (e.g., 12) consecutive subcarriers in the frequency domain. For reference, a resource configured with one OFDM symbol and one subcarrier may be referred to as a resource element (RE) or a tone. Therefore, one RB can be configured with $N^{slot}_{symb}$ * $N^{RB}_{sc}$ resource elements. Each resource element in the resource grid can be uniquely defined by a pair of indexes (k, l) in one slot. k may be an index assigned from 0 to $N^{size,\mu}_{grid,x}$ * $N^{RB}_{sc}$ - 1 in the frequency domain, and 1 may be an index assigned from 0 to $N^{slot}_{symb}$ - 1 in the time domain.

In order for the UE to receive a signal from the base station or to transmit a signal to the base station, the time/frequency of the UE may be synchronized with the time/frequency of the base station. This is because when the base station and the UE are synchronized, the UE can determine the time and frequency parameters necessary for demodulating the DL signal and transmitting the UL signal at the correct time.

Each symbol of a radio frame used in a time division duplex (TDD) or an unpaired spectrum may be configured with at least one of a DL symbol, an UL symbol, and a flexible symbol. A radio frame used as a DL carrier in a frequency division duplex (FDD) or a paired spectrum may be configured with a DL symbol or a flexible symbol, and a radio frame used as a UL carrier may be configured with a UL symbol or a flexible symbol. In the DL symbol, DL transmission is possible, but UL transmission is impossible. In the UL symbol, UL transmission is possible, but DL transmission is impossible. The flexible symbol may be determined to be used as a DL or an UL according to a signal.

Information on the type of each symbol, i.e., information representing any one of DL symbols, UL symbols, and flexible symbols, may be configured with a cell-specific or common radio resource control (RRC) signal. In addition, information on the type of each symbol may additionally be configured with a UE-specific or dedicated RRC signal. The base station informs, by using cell-specific RRC signals, i) the period of cell-specific slot configuration, ii) the number of slots with only DL symbols from the beginning of the period of cell-specific slot configuration, iii) the number of DL symbols from the first symbol of the slot immediately following the slot with only DL symbols, iv) the number of slots with only UL symbols from the end of the period of cell specific slot configuration, and v) the number of UL symbols from the last symbol of the slot immediately before the slot with only the UL symbol. Here, symbols not configured with any one of a UL symbol and a DL symbol are flexible symbols.

When the information on the symbol type is configured with the UE-specific RRC signal, the base station may signal whether the flexible symbol is a DL symbol or an UL symbol in the cell-specific RRC signal. In this case, the UE-specific RRC signal can not change a DL symbol or a UL symbol configured with the cell-specific RRC signal into another symbol type. The UE-specific RRC signal may signal the number of DL symbols among the $N^{slot}_{symb}$ symbols of the corresponding slot for each slot, and the number of UL symbols among the $N^{slot}_{symb}$ symbols of the corresponding slot. In this case, the DL symbol of the slot may be continuously configured with the first symbol to the i-th symbol of the slot. In addition, the UL symbol of the slot may be continuously configured with the j-th symbol to the last symbol of the slot (where i < j). In the slot, symbols not configured with any one of a UL symbol and a DL symbol are flexible symbols.

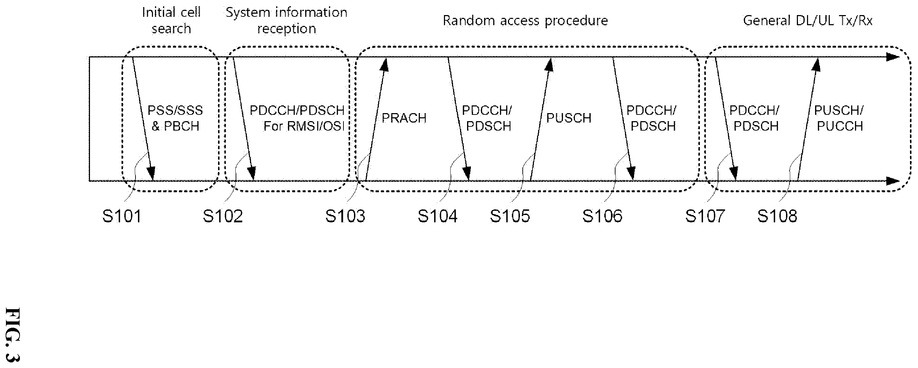

FIG. 3 is a diagram for explaining a physical channel used in a 3GPP system (e.g., NR) and a typical signal transmission method using the physical channel.

If the power of the UE is turned on or the UE camps on a new cell, the UE performs an initial cell search (S101). Specifically, the UE may synchronize with the BS in the initial cell search. For this, the UE may receive a primary synchronization signal (PSS) and a secondary synchronization signal (SSS) from the base station to synchronize with the base station, and obtain information such as a cell ID. Thereafter, the UE can receive the physical broadcast channel from the base station and obtain the broadcast information in the cell.

Upon completion of the initial cell search, the UE receives a physical downlink shared channel (PDSCH) according to the physical downlink control channel (PDCCH) and information in the PDCCH, so that the UE can obtain more specific system information than the system information obtained through the initial cell search (S102). Here, the system information received by the UE is cell-common system information for the UE to properly operate at the physical layer in Radio Resource Control (RRC), and is referred to as remaining system information (RSMI) or system information block (SIB) 1.

When the UE initially accesses the base station or does not have radio resources for signal transmission (when the UE is in RRC_IDLE mode), the UE may perform a random access procedure on the base station (operations S103 to S106). First, the UE may transmit a preamble through a physical random access channel (PRACH) (S103), and receive a response message for the preamble from the base station through the PDCCH and the corresponding PDSCH (S104). When a valid random access response is received by the UE, the UE transmits data including the identifier of the UE and the like to the base station through a physical uplink shared channel (PUSCH) indicated by the UL grant transmitted through the PDCCH from the base station (S105). Next, the UE waits for reception of the PDCCH as an indication of the base station for collision resolution. If the UE successfully receives the PDCCH through the identifier of the UE (S106), the random access process is terminated. During the random access process, the UE may obtain UE-specific system information necessary for the UE to properly operate at the physical layer in the RRC layer. When the UE obtains UE-specific system information from the RRC layer, the UE enters the RRC_CONNECTED mode.

The RRC layer is used for message generation and management for control between a UE and a radio access network (RAN). More specifically, in the RRC layer, the base station and the UE may perform broadcasting of cell system information, delivery management of paging messages, mobility management and handover, measurement report and control thereof, UE capability management, and storage management including existing management necessary for all UEs in the cell. In general, since the update of the signal (hereinafter, referred to as RRC signal) transmitted from the RRC layer is longer than the transmission/reception period (i.e., transmission time interval, TTI) in the physical layer, the RRC signal may be maintained unchanged for a long period.

After the above-described procedure, the UE receives PDCCH/PDSCH (S107) and transmits a physical uplink shared channel (PUSCH)/physical uplink control channel (PUCCH) (S108) as a general UL/DL signal transmission procedure. In particular, the UE may receive downlink control information (DCI) through the PDCCH. The DCI may include control information such as resource allocation information for the UE. Also, the format of the DCI may vary depending on the intended use. The uplink control information (UCI) that the UE transmits to the base station through UL includes a DL/UL ACK/NACK signal, a channel quality indicator (CQI), a precoding matrix index (PMI), a rank indicator (RI), and the like. Here, the CQI, PMI, and RI may be included in channel state information (CSI). In the 3GPP NR system, the UE may transmit control information such as HARQ-ACK and CSI described above through the PUSCH and/or PUCCH.

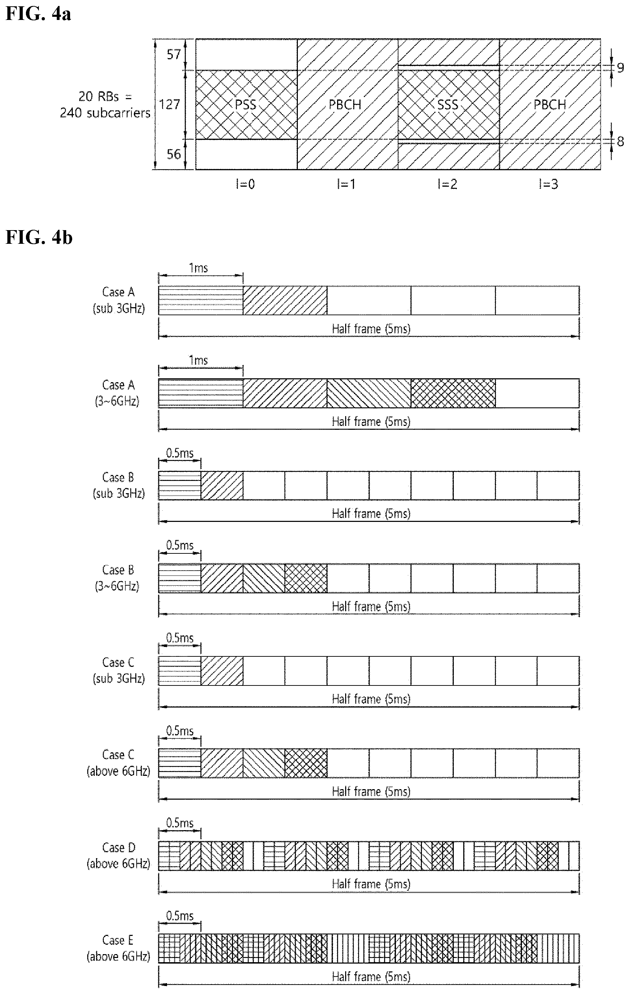

FIG. 4a and 4b illustrate an SS/PBCH block for initial cell access in a 3GPP NR system.

When the power is turned on or wanting to access a new cell, the UE may obtain time and frequency synchronization with the cell and perform an initial cell search procedure. The UE may detect a physical cell identity $N^{cell}_{ID}$ of the cell during a cell search procedure. For this, the UE may receive a synchronization signal, for example, a primary synchronization signal (PSS) and a secondary synchronization signal (SSS), from a base station, and synchronize with the base station. In this case, the UE can obtain information such as a cell identity (ID).

Referring to FIG. 4a, a synchronization signal (SS) will be described in more detail. The synchronization signal can be classified into PSS and SSS. The PSS may be used to obtain time domain synchronization and/or frequency domain synchronization, such as OFDM symbol synchronization and slot synchronization. The SSS can be used to obtain frame synchronization and cell group ID. Referring to FIG. 4a and Table 1, the SS/PBCH block can be configured with consecutive 20 RBs (= 240 subcarriers) in the frequency axis, and can be configured with consecutive 4 OFDM symbols in the time axis. In this case, in the SS/PBCH block, the PSS is transmitted in the first OFDM symbol and the SSS is transmitted in the third OFDM symbol through the 56th to 182th subcarriers. Here, the lowest subcarrier index of the SS/PBCH block is numbered from 0. In the first OFDM symbol in which the PSS is transmitted, the base station does not transmit a signal through the remaining subcarriers, i.e., 0th to 55th and 183th to 239th subcarriers. In addition, in the third OFDM symbol in which the SSS is transmitted, the base station does not transmit a signal through 48th to 55th and 183th to 191th subcarriers. The base station transmits a physical broadcast channel (PBCH) through the remaining RE except for the above signal in the SS/PBCH block.

[Table 1]

| Channel or signal | OFDM symbol number *l* relative to the start of an SS/PBCH block | Subcarrier number *k* relative to the start of an SS/PBCH block |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239 |
| | 2 | 48, 49, ..., 55, 183, 184, ..., 191 |
| PBCH | 1, 3 | 0, 1, ..., 239 |
| | 2 | 0, 1, ..., 47, 192, 193, ..., 239 |
| DM-RS for PBCH | 1, 3 | 0+*v*,4+*v*,8+*v*,..,236+*v* |
| | 2 | 0 + *v*,4 + *v*.8 + *v*,...,44 +*v* <br> 192+ *v*,196 + *v*,...,236 + *v* |

The SS allows a total of 1008 unique physical layer cell IDs to be grouped into 336 physical-layer cell-identifier groups, each group including three unique identifiers, through a combination of three PSSs and SSSs, specifically, such that each physical layer cell ID is to be only a part of one physical-layer cell-identifier group. Therefore, the physical layer cell ID $N^{cell}_{ID} = 3N^{(1)}_{ID} + N^{(2)}_{ID}$ can be uniquely defined by the index $N^{(1)}_{ID}$ ranging from 0 to 335 indicating a physical-layer cell-identifier group and the index $N^{(2)}_{ID}$ ranging from 0 to 2 indicating a physical-layer identifier in the physical-layer cell-identifier group. The UE may detect the PSS and identify one of the three unique physical-layer identifiers. In addition, the UE can detect the SSS and identify one of the 336 physical layer cell IDs associated with the physical-layer identifier. In this case, the sequence $d_{PSS}(n)$ of the PSS is as follows.

$$d_{PSS}(n) = 1 - 2x(m)$$

$$m = \left(n + 43N^{(2)}_{ID}\right)\bmod 127$$

$$0 \leq n < 127$$

Here, $x(i + 7) = (x(i + 4) + x(i))\bmod 2$ and is given as,

$$[x(6) \quad x(5) \quad x(4) \quad x(3) \quad x(2) \quad x(1) \quad x(0)] = [1 \quad 1 \quad 1 \quad 0 \quad 1 \quad 1 \quad 0]$$

Further, the sequence $d_{SSS}(n)$ of the SSS is as follows.

$$d_{SSS}(n) = [1 - 2x_0((n + m_0) \bmod 127)][1 - 2x_1((n + m_1) \bmod 127)]$$

$$m_0 = 15 \left\lfloor \frac{N_{ID}^{(1)}}{112} \right\rfloor + 5N_{ID}^{(2)}$$

$$m_1 = N_{ID}^{(1)} \bmod 112$$

$$0 \le n < 127$$

$$x_0(i + 7) = (x_0(i + 4) + x_0(i)) \bmod 2$$

Here, $x_1(i + 7) = (x_1(i + 1) + x_1(i)) \bmod 2$ and is given as,

$$[x_0(6) \quad x_0(5) \quad x_0(4) \quad x_0(3) \quad x_0(2) \quad x_0(1) \quad x_0(0)] = [0 \quad 0 \quad 0 \quad 0 \quad 0 \quad 0 \quad 1]$$

$$[x_1(6) \quad x_1(5) \quad x_1(4) \quad x_1(3) \quad x_1(2) \quad x_1(1) \quad x_1(0)] = [0 \quad 0 \quad 0 \quad 0 \quad 0 \quad 0 \quad 1]$$

A radio frame with a 10 ms length may be divided into two half frames with a 5 ms length. Referring to FIG. 4b, a description will be made of a slot in which SS/PBCH blocks are transmitted in each half frame. A slot in which the SS/PBCH block is transmitted may be any one of the cases A, B, C, D, and E. In the case A, the subcarrier spacing is 15 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case B, the subcarrier spacing is 30 kHz and the starting time point of the SS/PBCH block is {4, 8, 16, 20} + 28*n. In this case, n = 0 at a carrier frequency of 3 GHz or less. In addition, it may be n = 0, 1 at carrier frequencies above 3 GHz and below 6 GHz. In the case C, the subcarrier spacing is 30 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case D, the subcarrier spacing is 120 kHz and the starting time point of the SS/PBCH block is the ({4, 8, 16, 20} + 28*n)-th symbol. In this case, at a carrier frequency of 6 GHz or more, n = 0, 1, 2, 3, 5, 6, 7, 8, 10, 11, 12, 13, 15, 16, 17, 18. In the case E, the subcarrier spacing is 240 kHz and the starting time point of the SS/PBCH block is the ({8, 12, 16, 20, 32, 36, 40, 44} + 56*n)-th symbol. In this case, at a carrier frequency of 6 GHz or more, n = 0, 1, 2, 3, 5, 6, 7, 8.

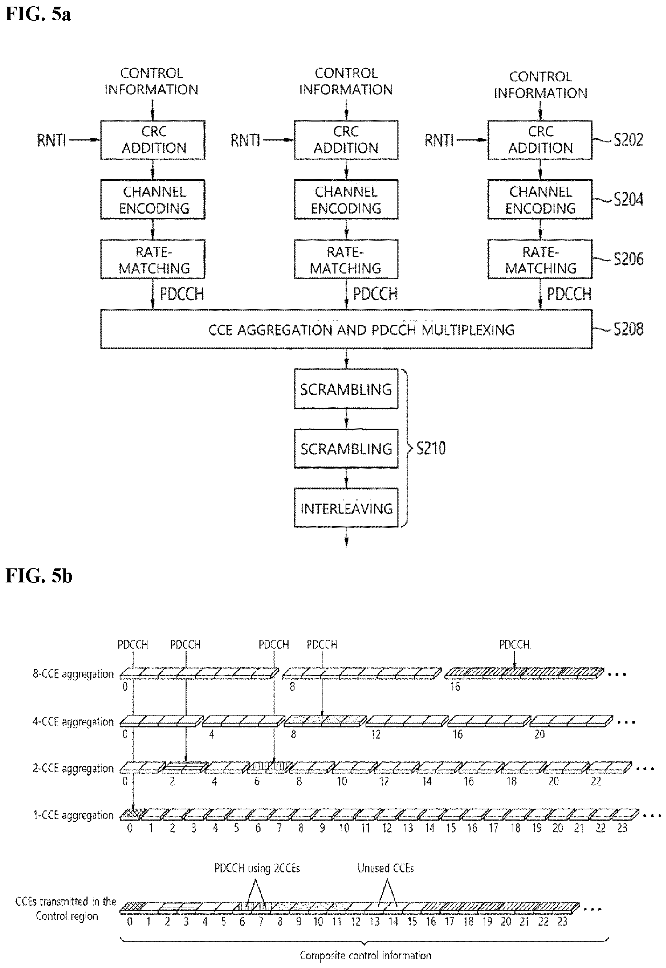

FIG. 5a and 5b illustrate a procedure for transmitting control information and a control channel in a 3GPP NR system. Referring to FIG. 5a, the base station may add a cyclic redundancy check (CRC) masked (e.g., an XOR operation) with a radio network temporary identifier (RNTI) to control information (e.g., downlink control information (DCI)) (S202). The base station may scramble the CRC with an RNTI value determined according to the purpose/target of each control information. The common RNTI used by one or more UEs can include at least one of a system information RNTI (SI-RNTI), a paging RNTI (P-RNTI), a random access RNTI (RA-RNTI), and a transmit power control RNTI (TPC-RNTI). In addition, the UE-specific RNTI may include at least one of a cell temporary RNTI (C-RNTI), and the CS-RNTI. Thereafter, the base station may perform rate-matching (S206) according to the amount of resource(s) used for PDCCH transmission after performing channel encoding (e.g., polar coding) (S204). Thereafter, the base station may multiplex the DCI(s) based on the control channel element (CCE) based PDCCH structure (S208). In addition, the base station may apply an additional process (S210) such as scrambling, modulation (e.g., QPSK), interleaving, and the like to the multiplexed DCI(s), and then map the DCI(s) to the resource to be transmitted. The CCE is a basic resource unit for the PDCCH, and one CCE may include a plurality (e.g., 6) of resource element groups (REGs). One REG may be configured with a plurality (e.g., 12) of REs. The number of CCEs used for one PDCCH may be defined as an aggregation level. In the 3GPP NR system, an aggregation level of 1, 2, 4, 8, or 16 may be used. FIG. 5b is a diagram related to a CCE aggregation level and the multiplexing of a PDCCH and illustrates the type of a CCE aggregation level used for one PDCCH and CCE(s) transmitted in the control area according thereto.

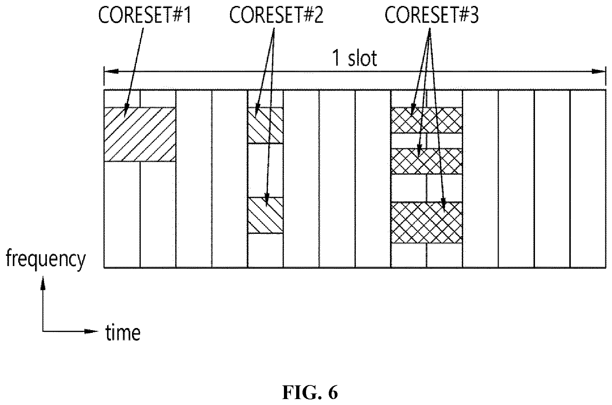

FIG. 6 illustrates a control resource set (CORESET) in which a physical downlink control channel (PDCCH) may be transmitted in a 3GPP NR system.

The CORESET is a time-frequency resource in which PDCCH, that is, a control signal for the UE, is transmitted. In addition, a search space to be described later may be mapped to one CORESET. Therefore, the UE may monitor the time-frequency domain designated as CORESET instead of monitoring all frequency bands for PDCCH reception, and decode the PDCCH mapped to CORESET. The base station may configure one or more CORESETs for each cell to the UE. The CORESET may be configured with up to three consecutive symbols on the time axis. In addition, the CORESET may be configured in units of six consecutive PRBs on the frequency axis. In the embodiment of FIG. 6, CORESET#1 is configured with consecutive PRBs, and CORESET#2 and CORESET#3 are configured with discontinuous PRBs. The CORESET can be located in any symbol in the slot. For example, in the embodiment of FIG. 5, CORESET#1 starts at the first symbol of the slot, CORESET#2 starts at the fifth symbol of the slot, and CORESET#9 starts at the ninth symbol of the slot.

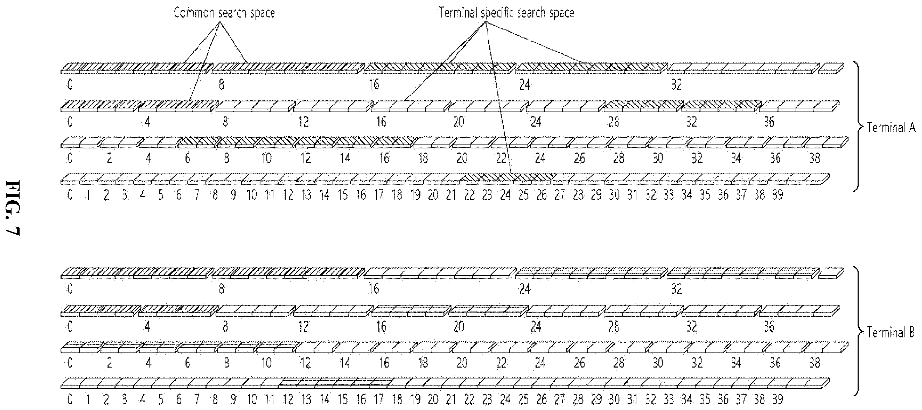

FIG. 7 illustrates a method for setting a PDCCH search space in a 3GPP NR system.

In order to transmit the PDCCH to the UE, each CORESET may have at least one search space. In the embodiment of the present disclosure, the search space is a set of all time-frequency resources (hereinafter, PDCCH candidates) through which the PDCCH of the UE is capable of being transmitted. The search space may include a common search space that the UE of the 3GPP NR is required to commonly search and a Terminal-specific or a UE-specific search space that a specific UE is required to search. In the common search space, UE may monitor the PDCCH that is set so that all UEs in the cell belonging to the same base station commonly search. In addition, the UE-specific search space may be set for each UE so that UEs monitor the PDCCH allocated to each UE at different search space position according to the UE. In the case of the UE-specific search space, the search space between the UEs may be partially overlapped and allocated due to the limited control area in which the PDCCH may be allocated. Monitoring the PDCCH includes blind decoding for PDCCH candidates in the search space. When the blind decoding is successful, it may be expressed that the PDCCH is (successfully) detected/received and when the blind decoding fails, it may be expressed that the PDCCH is not detected/not received, or is not successfully detected/received.

For convenience of explanation, a PDCCH scrambled with a group common (GC) RNTI previously known to UEs so as to transmit DL control information to the one or more UEs is referred to as a group common (GC) PDCCH or a common PDCCH. In addition, a PDCCH scrambled with a specific-terminal RNTI that a specific UE already knows so as to transmit UL scheduling information or DL scheduling information to the specific UE is referred to as a specific-UE PDCCH. The common PDCCH may be included in a common search space, and the UE-specific PDCCH may be included in a common search space or a UE-specific PDCCH.

The base station may signal each UE or UE group through a PDCCH about information (i.e., DL Grant) related to resource allocation of a paging channel (PCH) and a downlink-shared channel (DL-SCH) that are a transmission channel or information (i.e., UL grant) related to resource allocation of a uplink-shared channel (UL-SCH) and a hybrid automatic repeat request (HARQ). The base station may transmit the PCH transport block and the DL-SCH transport block through the PDSCH. The base station may transmit data excluding specific control information or specific service data through the PDSCH. In addition, the UE may receive data excluding specific control information or specific service data through the PDSCH.

The base station may include, in the PDCCH, information on to which UE (one or a plurality of UEs) PDSCH data is transmitted and how the PDSCH data is to be received and decoded by the corresponding UE, and transmit the PDCCH. For example, it is assumed that the DCI transmitted on a specific PDCCH is CRC masked with an RNTI of "A", and the DCI indicates that PDSCH is allocated to a radio resource (e.g., frequency location) of "B" and indicates transmission format information (e.g., transport block size, modulation scheme, coding information, etc.) of "C". The UE monitors the PDCCH using the RNTI information that the UE has. In this case, if there is a UE which performs blind decoding the PDCCH using the "A" RNTI, the UE receives the PDCCH, and receives the PDSCH indicated by "B" and "C" through the received PDCCH information.

Table 2 shows an embodiment of a physical uplink control channel (PUCCH) used in a wireless communication system.

[Table 2]

| PUCCH format | Length in OFDM symbols | Number of bits |
|---|---|---|
| 0 | 1-2 | $\leq 2$ |
| 1 | 4 - 14 | $\leq 2$ |
| 2 | 1 - 2 | $> 2$ |
| 3 | 4 - 14 | $> 2$ |

(continued)

| PUCCH format | Length in OFDM symbols | Number of bits |
|---|---|---|
| 4 | 4-14 | >2 |

PUCCH may be used to transmit the following UL control information (UCI).

- Scheduling Request (SR): Information used for requesting a UL UL-SCH resource.
- HARQ-ACK: A Response to PDCCH (indicating DL SPS release) and/or a response to DL transport block (TB) on PDSCH. HARQ-ACK indicates whether information transmitted on the PDCCH or PDSCH is received. The HARQ-ACK response includes positive ACK (simply ACK), negative ACK (hereinafter NACK), Discontinuous Transmission (DTX), or NACK/DTX. Here, the term HARQ-ACK is used mixed with HARQ-ACK/NACK and ACK/NACK. In general, ACK may be represented by bit value 1 and NACK may be represented by bit value 0.
- Channel State Information (CSI): Feedback information on the DL channel. The UE generates it based on the CSI-Reference Signal (RS) transmitted by the base station. Multiple Input Multiple Output (MIMO)-related feedback information includes a Rank Indicator (RI) and a Precoding Matrix Indicator (PMI). CSI can be divided into CSI part 1 and CSI part 2 according to the information indicated by CSI.

In the 3GPP NR system, five PUCCH formats may be used to support various service scenarios, various channel environments, and frame structures.

PUCCH format 0 is a format capable of transmitting 1-bit or 2-bit HARQ-ACK information or SR. PUCCH format 0 can be transmitted through one or two OFDM symbols on the time axis and one PRB on the frequency axis. When PUCCH format 0 is transmitted in two OFDM symbols, the same sequence to the two symbols may be transmitted through different RBs. In this case, the sequence may be a cyclic shift (CS) sequence from the base sequence used for PUCCH format 0. Through this, the UE can obtain a frequency diversity gain. Specifically, the UE may determine a cyclic shift (CS) value $m_{cs}$ according to the $M_{bit}$ bit UCI ($M_{bit}$ = 1 or 2). In addition, a sequence in which a base sequence of length 12 is cyclically shifted based on a predetermined CS value $m_{cs}$ may be mapped to 1 OFDM symbol and 12 REs of 1 RB and transmitted. When the number of cyclic shifts available to the UE is 12 and $M_{bit}$ = 1, 1 bit UCI 0 and 1 may be mapped to two cyclic shifted sequences having a difference of 6 cyclic shift values, respectively. In addition, when $M_{bit}$ = 2, 2bits UCI 00, 01, 11, and 10 may be mapped to four cyclic shifted sequences in which the difference in cyclic shift values is 3, respectively.

PUCCH format 1 may deliver 1-bit or 2-bit HARQ-ACK information or SR. PUCCH format 1 may be transmitted through consecutive OFDM symbols on the time axis and one PRB on the frequency axis. Here, the number of OFDM symbols occupied by PUCCH format 1 may be one of 4 to 14. More specifically, UCI, which is $M_{bit}$ = 1, may be BPSK-modulated. The UE may modulate UCI, which is $M_{bit}$ = 2, with quadrature phase shift keying (QPSK). A signal is obtained by multiplying a modulated complex valued symbol d(0) by a sequence of length 12. In this case, the sequence may be a base sequence used for PUCCH format 0. The UE spreads the even-numbered OFDM symbols to which PUCCH format 1 is allocated through the time axis orthogonal cover code (OCC) to transmit the obtained signal. PUCCH format 1 determines the maximum number of different UEs multiplexed in the one RB according to the length of the OCC to be used. A demodulation reference signal (DMRS) may be spread with OCC and mapped to the odd-numbered OFDM symbols of PUCCH format 1.

PUCCH format 2 may deliver UCI exceeding 2 bits. PUCCH format 2 may be transmitted through one or two OFDM symbols on the time axis and one or a plurality of RBs on the frequency axis. When PUCCH format 2 is transmitted in two OFDM symbols, the sequences which are transmitted in different RBs through the two OFDM symbols may be same each other. Here, the sequence may be a plurality of modulated complex valued symbols d(0),..., d($M_{symbol}$-1). Here, $M_{symbol}$ may be $M_{bit}$/2. Through this, the UE may obtain a frequency diversity gain. More specifically, $M_{bit}$ bit UCI ($M_{bit}$>2) is bit-level scrambled, QPSK modulated, and mapped to RB(s) of one or two OFDM symbol(s). Here, the number of RBs may be one of 1 to 16.

PUCCH format 3 or PUCCH format 4 may deliver UCI exceeding 2 bits. PUCCH format 3 or PUCCH format 4 may be transmitted through consecutive OFDM symbols on the time axis and one PRB on the frequency axis. The number of OFDM symbols occupied by PUCCH format 3 or PUCCH format 4 may be one of 4 to 14. Specifically, the UE modulates $M_{bit}$ bits UCI ($M_{bit}$ > 2) with $\pi/2$-Binary Phase Shift Keying (BPSK) or QPSK to generate a complex valued symbol d(0) to d($M_{symb}$-1). Here, when using $\pi/2$-BPSK, $M_{symb}$ = $M_{bit}$, and when using QPSK, $M_{symb}$ = $M_{bit}$/2. The UE may not apply block-unit spreading to the PUCCH format 3. However, the UE may apply block-unit spreading to one RB (i.e., 12 subcarriers) using PreDFT-OCC of a length of 12 such that PUCCH format 4 may have two or four multiplexing capacities. The UE performs transmit precoding (or DFT-precoding) on the spread signal and maps it to each RE to transmit the spread signal.

In this case, the number of RBs occupied by PUCCH format 2, PUCCH format 3, or PUCCH format 4 may be determined according to the length and maximum code rate of the UCI transmitted by the UE. When the UE uses PUCCH format 2, the UE may transmit HARQ-ACK information and CSI information together through the PUCCH. When the number of RBs that the UE may transmit is greater than the maximum number of RBs that PUCCH format 2, or PUCCH format 3, or PUCCH format 4 may use, the UE may transmit only the remaining UCI information without transmitting some UCI information according to the priority of the UCI information.

PUCCH format 1, PUCCH format 3, or PUCCH format 4 may be configured through the RRC signal to indicate frequency hopping in a slot. When frequency hopping is configured, the index of the RB to be frequency hopped may be configured with an RRC signal. When PUCCH format 1, PUCCH format 3, or PUCCH format 4 is transmitted through N OFDM symbols on the time axis, the first hop may have floor (N/2) OFDM symbols and the second hop may have ceiling(N/2) OFDM symbols.

PUCCH format 1, PUCCH format 3, or PUCCH format 4 may be configured to be repeatedly transmitted in a plurality of slots. In this case, the number K of slots in which the PUCCH is repeatedly transmitted may be configured by the RRC signal. The repeatedly transmitted PUCCHs must start at an OFDM symbol of the constant position in each slot, and have the constant length. When one OFDM symbol among OFDM symbols of a slot in which a UE should transmit a PUCCH is indicated as a DL symbol by an RRC signal, the UE may not transmit the PUCCH in a corresponding slot and delay the transmission of the PUCCH to the next slot to transmit the PUCCH.

Meanwhile, in the 3GPP NR system, the UE may perform transmission/reception using a bandwidth less than or equal to the bandwidth of the carrier (or cell). To this end, the UE may be configured with a bandwidth part (BWP) consisting of a continuous bandwidth of a portion of the bandwidth of the carrier. A UE operating according to TDD or operating in an unpaired spectrum may receive up to four DL/UL BWP pairs for one carrier (or cell). In addition, the UE may activate one DL/UL BWP pair. A UE operating according to FDD or operating in a paired spectrum may receive up to 4 DL BWPs on a downlink carrier (or cell) and up to 4 UL BWPs on an uplink carrier (or cell). The UE may activate one DL BWP and UL BWP for each carrier (or cell). The UE may not receive or transmit in time-frequency resources other than the activated BWP. The activated BWP may be referred to as an active BWP.

The base station may indicate an activated BWP among the BWPs configured by the UE through downlink control information (DCI). The BWP indicated through DCI is activated, and other configured BWP(s) are deactivated. In a carrier (or cell) operating in TDD, the base station may include a bandwidth part indicator (BPI) indicating the BWP activated in the DCI scheduling the PDSCH or PUSCH to change the DL/UL BWP pair of the UE. The UE may receive a DCI scheduling a PDSCH or a PUSCH and may identify a DL/UL BWP pair activated based on the BPI. In the case of a downlink carrier (or cell) operating in FDD, the base station may include a BPI indicating the activated BWP in the DCI scheduling the PDSCH to change the DL BWP of the UE. In the case of an uplink carrier (or cell) operating in FDD, the base station may include a BPI indicating the activated BWP in the DCI scheduling the PUSCH to change the UL BWP of the UE.

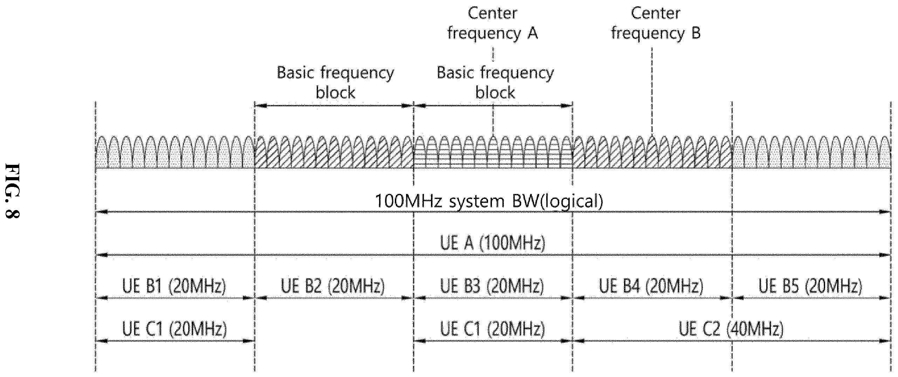

FIG. 8 is a conceptual diagram illustrating carrier aggregation.

The carrier aggregation is a method in which the UE uses a plurality of frequency blocks or cells (in the logical sense) configured with UL resources (or component carriers) and/or DL resources (or component carriers) as one large logical frequency band in order for a wireless communication system to use a wider frequency band. One component carrier may also be referred to as a term called a Primary cell (PCell) or a Secondary cell (SCell), or a Primary SCell (PScell). However, hereinafter, for convenience of description, the term "component carrier" is used.

Referring to FIG. 8, as an example of a 3GPP NR system, the entire system band may include up to 16 component carriers, and each component carrier may have a bandwidth of up to 400 MHz. The component carrier may include one or more physically consecutive subcarriers. Although it is shown in FIG. 8 that each of the component carriers has the same bandwidth, this is merely an example, and each component carrier may have a different bandwidth. Also, although each component carrier is shown as being adjacent to each other in the frequency axis, the drawings are shown in a logical concept, and each component carrier may be physically adjacent to one another, or may be spaced apart.

Different center frequencies may be used for each component carrier. Also, one common center frequency may be used in physically adjacent component carriers. Assuming that all the component carriers are physically adjacent in the embodiment of FIG. 8, center frequency A may be used in all the component carriers. Further, assuming that the respective component carriers are not physically adjacent to each other, center frequency A and the center frequency B can be used in each of the component carriers.

When the total system band is extended by carrier aggregation, the frequency band used for communication with each UE can be defined in units of a component carrier. UE A may use 100 MHz, which is the total system band, and performs communication using all five component carriers. UEs $B_1 \sim B_5$ can use only a 20 MHz bandwidth and perform communication using one component carrier. UEs $C_1$ and $C_2$ may use a 40 MHz bandwidth and perform communication using two component carriers, respectively. The two component carriers may be logically/physically adjacent or non-adjacent. UE $C_1$ represents the case of using two non-adjacent component carriers, and UE $C_2$ represents the case of using two adjacent component carriers.

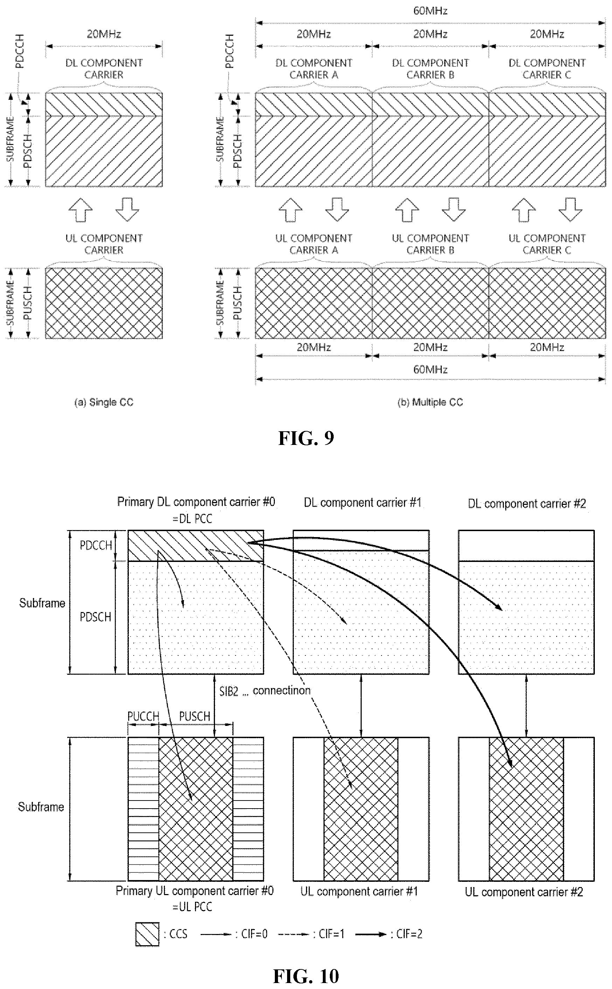

FIG. 9 is a drawing for explaining single carrier communication and multiple carrier communication. Particularly, FIG. 9(a) shows a single carrier subframe structure and FIG. 9(b) shows a multi-carrier subframe structure.

Referring to FIG. 9(a), in an FDD mode, a general wireless communication system may perform data transmission or reception through one DL band and one UL band corresponding thereto. In another specific embodiment, in a TDD mode, the wireless communication system may divide a radio frame into a UL time unit and a DL time unit in a time domain, and perform data transmission or reception through a UL/DL time unit. Referring to FIG. 9(b), three 20 MHz component carriers (CCs) can be aggregated into each of UL and DL, so that a bandwidth of 60 MHz can be supported. Each CC may be adjacent or non-adjacent to one another in the frequency domain. FIG. 9(b) shows a case where the bandwidth of the UL CC and the bandwidth of the DL CC are the same and symmetric, but the bandwidth of each CC can be determined independently. In addition, asymmetric carrier aggregation with different number of UL CCs and DL CCs is possible. A DL/UL CC allocated/configured to a specific UE through RRC may be called as a serving DL/UL CC of the specific UE.

The base station may perform communication with the UE by activating some or all of the serving CCs of the UE or deactivating some CCs. The base station can change the CC to be activated/deactivated, and change the number of CCs to be activated/deactivated. If the base station allocates a CC available for the UE as to be cell-specific or UE-specific, at least one of the allocated CCs can be deactivated, unless the CC allocation for the UE is completely reconfigured or the UE is handed over. One CC that is not deactivated by the UE is called as a Primary CC (PCC) or a primary cell (PCell), and a CC that the base station can freely activate/deactivate is called as a Secondary CC (SCC) or a secondary cell (SCell).

Meanwhile, 3GPP NR uses the concept of a cell to manage radio resources. A cell is defined as a combination of DL resources and UL resources, that is, a combination of DL CC and UL CC. A cell may be configured with DL resources alone, or a combination of DL resources and UL resources. When the carrier aggregation is supported, the linkage between the carrier frequency of the DL resource (or DL CC) and the carrier frequency of the UL resource (or UL CC) may be indicated by system information. The carrier frequency refers to the center frequency of each cell or CC. A cell corresponding to the PCC is referred to as a PCell, and a cell corresponding to the SCC is referred to as an SCell. The carrier corresponding to the PCell in the DL is the DL PCC, and the carrier corresponding to the PCell in the UL is the UL PCC. Similarly, the carrier corresponding to the SCell in the DL is the DL SCC and the carrier corresponding to the SCell in the UL is the UL SCC. According to UE capability, the serving cell(s) may be configured with one PCell and zero or more SCells. In the case of UEs that are in the RRC_CONNECTED state but not configured for carrier aggregation or that do not support carrier aggregation, there is only one serving cell configured only with PCell.

As mentioned above, the term "cell" used in carrier aggregation is distinguished from the term "cell" which refers to a certain geographical area in which a communication service is provided by one base station or one antenna group. That is, one component carrier may also be referred to as a scheduling cell, a scheduled cell, a primary cell (PCell), a secondary cell (SCell), or a primary SCell (PScell). However, in order to distinguish between a cell referring to a certain geographical area and a cell of carrier aggregation, in the present disclosure, a cell of a carrier aggregation is referred to as a CC, and a cell of a geographical area is referred to as a cell.

FIG. 10 is a diagram showing an example in which a cross carrier scheduling technique is applied. When cross carrier scheduling is set, the control channel transmitted through the first CC may schedule a data channel transmitted through the first CC or the second CC using a carrier indicator field (CIF). The CIF is included in the DCI. In other words, a scheduling cell is set, and the DL grant/UL grant transmitted in the PDCCH area of the scheduling cell schedules the PDSCH/PUSCH of the scheduled cell. That is, a search area for the plurality of component carriers exists in the PDCCH area of the scheduling cell. A PCell may be basically a scheduling cell, and a specific SCell may be designated as a scheduling cell by an upper layer.

In the embodiment of FIG. 10, it is assumed that three DL CCs are merged. Here, it is assumed that DL component carrier #0 is DL PCC (or PCell), and DL component carrier #1 and DL component carrier #2 are DL SCCs (or SCell). In addition, it is assumed that the DL PCC is set to the PDCCH monitoring CC. When cross-carrier scheduling is not configured by UE-specific (or UE-group-specific or cell-specific) higher layer signaling, a CIF is disabled, and each DL CC can transmit only a PDCCH for scheduling its PDSCH without the CIF according to an NR PDCCH rule (non-cross-carrier scheduling, self-carrier scheduling). Meanwhile, if cross-carrier scheduling is configured by UE-specific (or UE-group-specific or cell-specific) higher layer signaling, a CIF is enabled, and a specific CC (e.g., DL PCC) may transmit not only the PDCCH for scheduling the PDSCH of the DL CC A using the CIF but also the PDCCH for scheduling the PDSCH of another CC (cross-carrier scheduling). On the other hand, a PDCCH is not transmitted in another DL CC. Accordingly, the UE monitors the PDCCH not including the CIF to receive a self-carrier scheduled PDSCH depending on whether the cross-carrier scheduling is configured for the UE, or monitors the PDCCH including the CIF to receive the cross-carrier scheduled PDSCH.

On the other hand, FIGS. 9 and 10 illustrate the subframe structure of the 3GPP LTE-A system, and the same or similar configuration may be applied to the 3GPP NR system. However, in the 3GPP NR system, the subframes of FIGS. 9 and 10 may be replaced with slots.

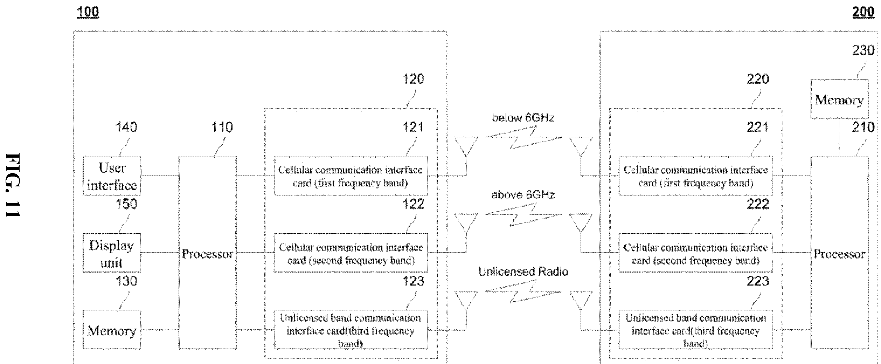

FIG. 11 is a block diagram showing the configurations of a UE and a base station according to an embodiment of the present disclosure.

In an embodiment of the present disclosure, the UE may be implemented with various types of wireless communication devices or computing devices that are guaranteed to be portable and mobile. The UE may be referred to as a User Equipment (UE), a Station (STA), a Mobile Subscriber (MS), or the like. In addition, in an embodiment of the present disclosure, the base station controls and manages a cell (e.g., a macro cell, a femto cell, a pico cell, etc.) corresponding to a service area, and performs functions of a signal transmission, a channel designation, a channel monitoring, a self diagnosis, a relay, or the like. The base station may be referred to as next Generation NodeB (gNB) or Access Point (AP).

As shown in the drawing, a UE 100 according to an embodiment of the present disclosure may include a processor 110, a communication module 120, a memory 130, a user interface 140, and a display unit 150.

First, the processor 110 may execute various instructions or programs and process data within the UE 100. In addition, the processor 110 may control the entire operation including each unit of the UE 100, and may control the transmission/reception of data between the units. Here, the processor 110 may be configured to perform an operation according to the embodiments described in the present disclosure. For example, the processor 110 may receive slot configuration information, determine a slot configuration based on the slot configuration information, and perform communication according to the determined slot configuration.

Next, the communication module 120 may be an integrated module that performs wireless communication using a wireless communication network and a wireless LAN access using a wireless LAN. For this, the communication module 120 may include a plurality of network interface cards (NICs) such as cellular communication interface cards 121 and 122 and an unlicensed band communication interface card 123 in an internal or external form. In the drawing, the communication module 120 is shown as an integral integration module, but unlike the drawing, each network interface card can be independently arranged according to a circuit configuration or usage.

The cellular communication interface card 121 may transmit or receive a radio signal with at least one of the base station 200, an external device, and a server by using a mobile communication network and provide a cellular communication service in a first frequency band based on the instructions from the processor 110. According to an embodiment, the cellular communication interface card 121 may include at least one NIC module using a frequency band of less than 6 GHz. At least one NIC module of the cellular communication interface card 121 may independently perform cellular communication with at least one of the base station 200, an external device, and a server in accordance with cellular communication standards or protocols in the frequency bands below 6 GHz supported by the corresponding NIC module.

The cellular communication interface card 122 may transmit or receive a radio signal with at least one of the base station 200, an external device, and a server by using a mobile communication network and provide a cellular communication service in a second frequency band based on the instructions from the processor 110. According to an embodiment, the cellular communication interface card 122 may include at least one NIC module using a frequency band of more than 6 GHz. At least one NIC module of the cellular communication interface card 122 may independently perform cellular communication with at least one of the base station 200, an external device, and a server in accordance with cellular communication standards or protocols in the frequency bands of 6 GHz or more supported by the corresponding NIC module.

The unlicensed band communication interface card 123 transmits or receives a radio signal with at least one of the base station 200, an external device, and a server by using a third frequency band which is an unlicensed band, and provides an unlicensed band communication service based on the instructions from the processor 110. The unlicensed band communication interface card 123 may include at least one NIC module using an unlicensed band. For example, the unlicensed band may be a band of 2.4 GHz, 5 GHz, 6GHz, 7GHz, or above 52.6GHz. At least one NIC module of the unlicensed band communication interface card 123 may independently or dependently perform wireless communication with at least one of the base station 200, an external device, and a server according to the unlicensed band communication standard or protocol of the frequency band supported by the corresponding NIC module.

The memory 130 stores a control program used in the UE 100 and various kinds of data therefor. Such a control program may include a prescribed program required for performing wireless communication with at least one among the base station 200, an external device, and a server.

Next, the user interface 140 includes various kinds of input/output means provided in the UE 100. In other words, the user interface 140 may receive a user input using various input means, and the processor 110 may control the UE 100 based on the received user input. In addition, the user interface 140 may perform an output based on instructions from the processor 110 using various kinds of output means.

Next, the display unit 150 outputs various images on a display screen. The display unit 150 may output various display objects such as content executed by the processor 110 or a user interface based on control instructions from the processor 110.

In addition, the base station 200 according to an embodiment of the present disclosure may include a processor 210, a communication module 220, and a memory 230.

First, the processor 210 may execute various instructions or programs, and process internal data of the base station 200. In addition, the processor 210 may control the entire operations of units in the base station 200, and control data transmission and reception between the units. Here, the processor 210 may be configured to perform operations according to embodiments described in the present disclosure. For example, the processor 210 may signal slot configuration and perform communication according to the signaled slot configuration.

Next, the communication module 220 may be an integrated module that performs wireless communication using a wireless communication network and a wireless LAN access using a wireless LAN. For this, the communication module 220 may include a plurality of network interface cards such as cellular communication interface cards 221 and 222 and an unlicensed band communication interface card 223 in an internal or external form. In the drawing, the communication module 220 is shown as an integral integration module, but unlike the drawing, each network interface card can be independently arranged according to a circuit configuration or usage.

The cellular communication interface card 221 may transmit or receive a radio signal with at least one of the UE 100, an external device, and a server by using a mobile communication network and provide a cellular communication service in the first frequency band based on the instructions from the processor 210. According to an embodiment, the cellular communication interface card 221 may include at least one NIC module using a frequency band of less than 6 GHz. The at least one NIC module of the cellular communication interface card 221 may independently perform cellular communication with at least one of the UE 100, an external device, and a server in accordance with the cellular communication standards or protocols in the frequency bands less than 6 GHz supported by the corresponding NIC module.

The cellular communication interface card 222 may transmit or receive a radio signal with at least one of the UE 100, an external device, and a server by using a mobile communication network and provide a cellular communication service in the second frequency band based on the instructions from the processor 210. According to an embodiment, the cellular communication interface card 222 may include at least one NIC module using a frequency band of 6 GHz or more. The at least one NIC module of the cellular communication interface card 222 may independently perform cellular communication with at least one of the base station 100, an external device, and a server in accordance with the cellular communication standards or protocols in the frequency bands 6 GHz or more supported by the corresponding NIC module.

The unlicensed band communication interface card 223 transmits or receives a radio signal with at least one of the base station 100, an external device, and a server by using the third frequency band which is an unlicensed band, and provides an unlicensed band communication service based on the instructions from the processor 210. The unlicensed band communication interface card 223 may include at least one NIC module using an unlicensed band. For example, the unlicensed band may be a band of 2.4 GHz, 5 GHz, 6GHz, 7GHz, or above 52.6GHz. At least one NIC module of the unlicensed band communication interface card 223 may independently or dependently perform wireless communication with at least one of the UE 100, an external device, and a server according to the unlicensed band communication standards or protocols of the frequency band supported by the corresponding NIC module.

FIG. 11 is a block diagram illustrating the UE 100 and the base station 200 according to an embodiment of the present disclosure, and blocks separately shown are logically divided elements of a device. Accordingly, the aforementioned elements of the device may be mounted in a single chip or a plurality of chips according to the design of the device. In addition, a part of the configuration of the UE 100, for example, a user interface 140, a display unit 150 and the like may be selectively provided in the UE 100. In addition, the user interface 140, the display unit 150 and the like may be additionally provided in the base station 200, if necessary.

A slot format may be configured for the UE by the base station in a TDD or unpaired spectrum system. The slot format may refer to the type of symbols in the slot. The symbol type may be at least one of a downlink symbol (DL symbol), an uplink symbol (UL symbol), or a flexible symbol. A symbol type of a slot in a radio frame may be configured for the UE by the base station. The flexible symbol may refer to a symbol that is not configured as a downlink symbol or an uplink symbol.

The UE may be semi-statically configured with information about the type of each symbol in the slot by receiving information about the type of each symbol in the slot from the base station through a cell-specific or cell-common radio resource control (RRC) signal. Here, the cell-specific (or, cell-common or UE-common) RRC signal includes tdd-UL-DL-Configuration Common. Further, the UE may be semi-statically configured with information about the type of each symbol in the slot by receiving information about the type of each symbol in the slot from the base station through a SIB1. Furthermore, the UE may semi-statically configured with information about the type of each symbol in the slot from the base station by receiving information about the type of each symbol in the slot from the base station through a UE-specific or UE-dedicated RRC signal. The base station may configure/set the type of each symbol in the slot for the UE by using the information about the type of each symbol in the slot.

When the UE receives the information on the type of each symbol in the slot from the base station through the cell-specific RRC signal, the information configured by the cell-specific RRC signal may include at least one among 1) the period of cell-specific slot configuration, 2) the number of slots including only DL symbols, starting from a start slot of the period, 3) the number of DL symbols, starting from the first symbol of a slot immediately following the last slot including only DL symbols, 4) the number of slots including only UL symbols from the last slot of the period, and 5) the number of UL symbols in a slot immediately preceding the last slot including only uplink symbols (in the backward direction from the last slot of the period). Here, a symbol that is not configured as a DL symbol or a UL symbol is a flexible symbol. In addition, when the UE receives the information about the type of each symbol in a slot from the base station through a cell-specific RRC signal, the information about the type of each symbol may include up to two slot patterns. In this case, the two patterns may be applied successively to symbols in the time domain. A DL symbol, a UL symbol, and a flexible symbol configured based on a cell-specific RRC signal or SIB1 may be referred to as a cell-specific DL symbol, a cell-specific UL symbol, and a cell-specific flexible symbol, respectively.

When the UE receives the information about type of each symbol in a slot from the base station through a UE-specific RRC signal, a cell-specific flexible symbol may be configured as a DL symbol or a UL symbol by the UE-specific RRC signal. Here, the UE-specific RRC signal includes tdd-UL-DL-ConfigurationDedicated. In this case, the information configured by the UE-specific RRC signal may include at least one among 1) an index of a slot within a slot configuration period, 2) the number of DL symbols from the first symbol of the slot indicated by the index, and 3) the number of UL symbols from the last symbol of the slot indicated by the index. Here, a symbol that is not configured as a DL symbol or a UL symbol is a flexible symbol. In addition, the UE may be configured such that all symbols in the slot are DL symbols, or may be configured such that all symbols in the slot are UL symbols. A DL symbol, a UL symbol, and a flexible symbol configured based on the UE-specific RRC signal may be referred to as a UE-specific DL symbol, a UE-specific UL symbol, and a UE-specific flexible symbol, respectively.

The base station may transmit information about the slot format to the UE via a slot format indicator (SFI) in DCI format 2_0 contained in a group common (GC)-PDCCH. The GC-PDCCH may be CRC-scrambled with SFI-RNTI for UEs receiving the information about the slot format. Hereinafter, an SFI transmitted via a GC-PDCCH may be described as a dynamic SFI.

The UE may receive a dynamic SFI through GC-PDCCH to receive indication of whether symbols in a slot are cell-specific flexible symbols or UE-specific flexible symbols, downlink symbols, uplink symbols, or flexible symbols. In other words, only a flexible symbol semi-statically configured for the UE may be indicated as one of a downlink symbol, an uplink symbol, and a flexible symbol via a dynamic SFI. The UE may not expect that a semi-statically configured downlink symbol or uplink symbol will be indicated as a different type of symbol by the dynamic SFI. The UE may perform blind decoding at each monitoring period configured by the base station to receive a GC-PDCCH transmitting DCI format 2_0 including the dynamic SFI. When the UE successfully receives the GC-PDCCH by performing the blind decoding, the UE may apply information about a slot format indicated by the dynamic SFI, starting from a slot in which the GC-PDCCH has been received.

A combination of slot formats that can be indicated through a dynamic SFI may be configured for the UE by the base station. The slot format combination may be for each of 1 to 256 slots, and a slot format combination for one of the 1 to 256 slots may be configured for the UE through a dynamic SFI. The dynamic SFI may include an index indicating a slot to which the slot format combination is applied. Table 3 shows a slot format combination for each slot (see 3GPP TS38.213).

[Table 3]

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | D | F | F | U | U |
| 51 | D | F | F | U | U | U | U | D | D | F | F | U | U | U |
| 52 | D | F | F | F | F | F | U | D | D | F | F | F | F | U |
| 53 | D | D | F | F | F | F | U | D | D | D | F | F | F | U |
| 54 | F | F | F | F | F | F | F | D | D | D | D | D | D | D |
| 55 | D | D | F | F | F | U | U | U | D | D | D | D | D | D |
| 56 – 254 | Reserved | | | | | | | | | | | | | |
| 255 | UE determines the slot format for the slot based on tdd-UL-DL-ConfigurationCommon, or tdd-UL-DL-ConfigurationDedicated and, if any, on detected DCI formats | | | | | | | | | | | | | |

In Table 3, D denotes a downlink symbol, U denotes an uplink symbol, and F denotes a flexible symbol. As shown in Table 3, DL/UL switching may be allowed up to two times within a slot.

In the present specification, the terms "configuration", "setting", and "indication" may be used interchangeably. That is, the terms "configured", "set", and "indicated" may have the same meaning, and similarly, the terms "is configured", "is set", and "is indicated" may have the same meaning.

Subband-based full duplex: Spectrum partitioning

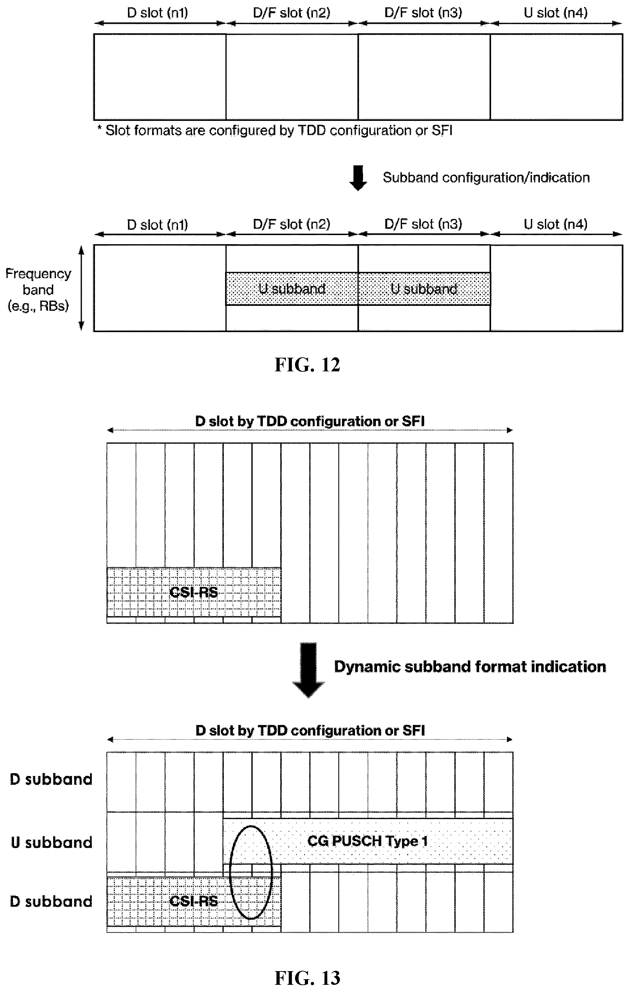

FIG. 12 to 13 illustrate a subband configuration method according to an embodiment of the present disclosure.

In TDD or unpaired spectrum, when a slot format is configured or indicated for a UE, only limited time domain resources may be allocated as UL resources, thereby resulting in problems such as reduced uplink coverage, increased latency, and reduced capacity. To address this problem, a solution is being discussed where a specific time-domain resource within a cell is divided into multiple subbands in the frequency domain and is used for both downlink reception and uplink transmission.

Referring to FIG. 12, a UE may receive TDD configuration information to be semi-statically configured with a slot format, or may receive SFI to be dynamically indicated with a slot format. Here, the TDD configuration information may include cell-specific (or, cell-common) TDD configuration information (e.g., tdd-UL-DL-ConfigurationCommon) or UE-specific TDD configuration information (e.g., tdd-UL-DL-ConfigurationDedicated). D (or DL) denotes downlink, U (or UL) denotes uplink, F denotes flexible, and D/F (or DL/F) denotes D (or DL) or F. Then, the UE may be configured with multiple subbands in the frequency domain for a specific time domain resource (e.g., at least one slot/symbol) (n2 to n3) through a subband configuration/indication from a base station. The subband configuration/indication information may include information about a set of contiguous RBs (e.g., a starting RB, the number of RBs, etc.). The multiple subbands may be subbands having the same or different formats. The subband format may include a downlink (D or, DL) subband and an uplink (U or, UL) subband. The D (or, DL) subband may include one or more downlink RB(s), and the U (or, UL) subband may include one or more uplink RB(s). The downlink RB(s) may refer to resources available for downlink reception, and the uplink RB(s) may refer to resources available for uplink transmission.

Referring to FIG. 13, multiple subbands may be (dynamically) indicated to a UE in the frequency domain with respect to downlink (D or DL) slot(s) or symbol(s) that are semi-statically configured (e.g., TDD configuration) or dynamically indicated (e.g., SFI) from a base station. In the drawing, the multiple subbands include two D (or DL) subbands and one U (or UL) subband. In this case, a resource configured or indicated to receive a downlink signal or channel in the same symbol(s) and a resource configured or indicated to transmit an uplink signal or channel may overlap in time domain. For example, when downlink reception (e.g., CSI-RS) is scheduled in the D (or, DL) subband and uplink transmission (e.g., PUSCH) is scheduled in the U (or, UL) subband, the reception and transmission may overlap in at least one symbol (5th or 6th symbol). Meanwhile, when the subbands are configured, the base station is capable of performing both downlink transmission and uplink reception in the same subband symbol (full duplex), while the UE that supports only half duplex is capable of only performing either downlink reception or uplink transmission in the same subband symbol. Here, the subband symbol refers to a symbol in which a subband is configured. Therefore, when downlink reception and uplink transmission overlap in the same subband symbol (see the circled portion in the drawing), the UE and the base station may operate as follows.

1) When downlink reception and uplink transmission belong to different UEs,

- Each UE can perform downlink reception or uplink transmission without limitation.
- A base station can perform downlink transmission and uplink reception simultaneously.

2) When downlink reception and uplink transmission belong to the same UE,

- The UE cannot simultaneously perform downlink reception and uplink transmission. Accordingly, to resolve collision between downlink reception and uplink transmission, the UE's downlink reception and/or uplink transmission may be limited.
- A base station can perform downlink transmission and uplink reception simultaneously. However, as the UE's downlink reception and/or uplink transmission is limited, the same limitation may be applied to the base station.

Here, the collision situation may not be limited to a case where multiple subbands are dynamically indicated to the UE in the frequency domain for a downlink slot or symbol(s) semi-statically configured or dynamically indicated by the base station. That is, the collision situation may also include a case where multiple subbands are semi-statically configured to the UE in the frequency domain for downlink slot or symbol(s) semi-statically configured or dynamically indicated by the base station

Furthermore, the collision situation may not be limited to a case where multiple subbands are dynamically indicated to the UE in the frequency domain for a flexible slot or symbol(s) semi-statically configured or dynamically indicated by a base station. That is, the collision situation may also include a case where multiple subbands are semi-statically configured to the UE in the frequency domain for a flexible slot or symbol(s) semi-statically configured or dynamically indicated by a base station.

Embodiment: Subband-based full duplex and signal/channel transmission/reception

First, the terms used in the present disclosure are summarized.

- Subband-based full duplex: This refers to a method that supports simultaneous transmission and reception by using subbands within a cell/BWP. It may be referred to as subband non-overlapping full duplex (SBFD). Here, a subband refers to a frequency band that is configured/indicated for SBFD operation within a cell/BWP. One subband may be configured as one set of contiguous (P)RBs. For examples of subband configuration/format, reference may be made to FIGS. 12 and 13. For example, for unpaired spectrum (i.e., TDD cell/BWP), a UL subband may be configured on a DL slot/symbol, or a UL subband may be configured on a flexible slot/symbol. When a subband is configured in a cell/BWP, the cell/BWP may include a TDMed subband interval and a non-subband interval in the time domain.
- Subband interval: This refers to a time interval in which a subband is set/indicated on a cell/BWP. For example, a subband interval includes a time interval in which a UL subband is configured/indicated. For example, a subband interval includes a slot in which a UL subband is configured/indicated. For example, a subband interval includes a symbol(s) (or a symbol set) in which a UL subband is configured/indicated. A subband interval includes a subband slot and/or subband symbol(s). The subband interval may include one or more subbands in the frequency domain. When multiple subbands are configured in a subband interval, the subbands are FDMed. Multiple subbands (a DL subband or a UL subband) in a subband interval may be configured so as not to overlap each other (non-overlapping) in the frequency domain.
- Non-subband interval: This refers to a time interval in which no subband is configured/indicated on a cell/BWP. A non-subband interval includes a non-subband slot and/or a non-subband symbol. A non-subband interval refers to a legacy interval or a normal interval. A non-subband band includes at least one of a DL symbol, a flexible symbol, and a UL symbol depending on the slot format. For example, when no subband is configured/indicated in a UL BWP, a non-subband interval includes a UL slot/symbol.
- Legacy NR system: This refers to a system that operates according to the traditional NR method because a subband-based full duplex operation is not supported or configured.

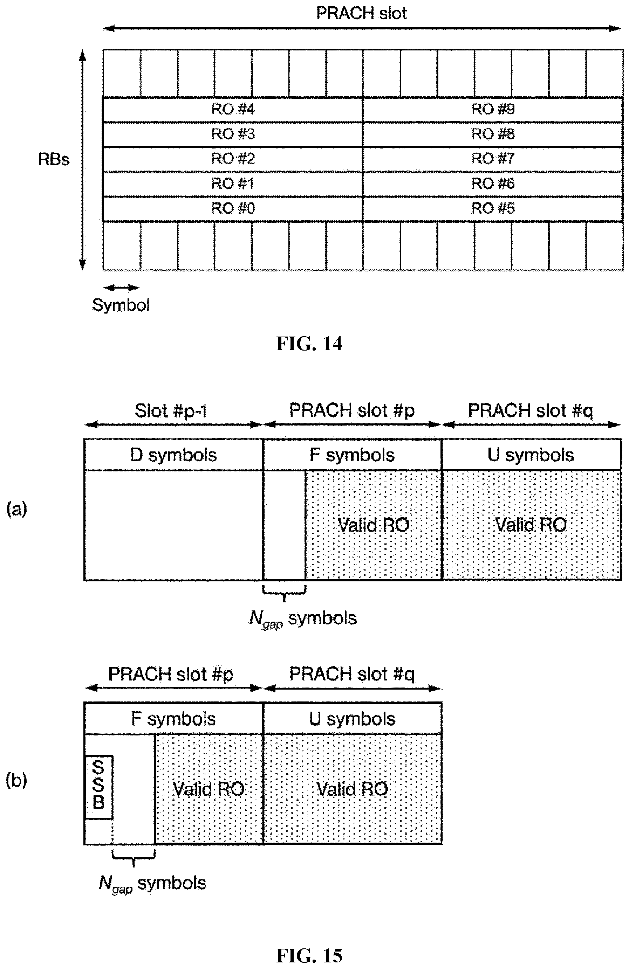

The problem to be solved in the present disclosure relates to when signals or channels, which a UE is configured or instructed to receive, collides in the same symbol as a RACH occasion (RO), which is an occasion for a PRACH transmission. The RO is configured within a PRACH slot. The PRACH slot is periodically configured in a unit of a radio frame based on the PRACH Configuration Index which is higher layer (e.g., RRC) information (see 3GPP TS38.211 V16.9.0 (2022-06), Tables 6.3.3.2-2 to 6.3.3.2-4). Within a PRACH slot, one or more ROs may be configured in the time domain and multiple ROs may be configured in the frequency domain. The number of symbols and the number of RBs occupied by one RO may be differently depending on the PRACH/preamble format. FIG. 14 illustrates multiple ROs configured within a PRACH slot. The drawing illustrates a case where within a PRACH slot, ROs are configured for two symbol sets in the time domain (TDM), and ROs are configured for five RBs in the frequency domain (FDM). Also, the case where one RO includes 76 symbols in the time domain is illustrated. In other words, the case in which one symbol set constituting one RO in the time domain includes seven symbols is illustrated.

Whether an RO is valid may be determined based on the slot format configuration of a PRACH slot. The UE may perform uplink transmission (e.g., PRACH) or downlink reception (e.g., PDSCH, CSI-RS) based on whether the RO is valid. Specifically, the UE may perform PRACH transmission on a valid RO. Furthermore, when the valid RO (including a gap symbol) and downlink reception (e.g., PDSCH reception or CSI-RS reception) overlap in the time domain, the UE may skip the downlink reception. On the other hand, when an RO is invalid, the UE may not perform PRACH transmission on the RO. Furthermore, even if an RO (including gap symbol) and downlink reception overlap in the time domain, the UE may perform the downlink reception normally when the RO is invalid. In a conventional NR system, the UE may determine a valid RO in TDD or unpaired spectrum as follows. Specifically, the valid RO may be determined as follows, based on whether tdd-UL-DL-ConfigurationCommon, which is information about the symbol type, is configured for the UE. The tdd-UL-DL- ConfigurationCommon may be received via a cell-specific (or cell-common) RRC signal or system information block 1 (SIB1).

- When tdd-UL-DL-ConfigurationCommon is not configured for the UE:
  An RO within a PRACH slot may be valid when the RO does not precede an SS/PBCH block within the same PRACH slot in the time domain and starts at least $N_{gap}$ symbols after a last SS/PBCH block reception symbol. Here, the last SS/PBCH block reception symbol refers to the last reception symbol of a last SS/PBCH block before the RO.

- When tdd-UL-DL-ConfigurationCommon is configured for the UE (FIG. 15):
  An RO within a PRACH slot is valid when the RO is on a UL symbol(s). Furthermore, when an RO within a PRACH slot starts at least $N_{gap}$ symbols after a last DL symbol without preceding an SS/PBCH block within the same PRACH slot in time domain (FIG. 15(a)) and starts at least $N_{gap}$ symbols after a last SS/PBCH block reception symbol (FIG. 15(b)), then the RO may be valid. Here, the last DL symbol refers to the last DL symbol before the RO in a DL symbol set configured by the tdd-UL-DL-ConfigurationCommon. In the drawings, a D symbol refers to a cell-common (or cell-specific) DL symbol, an F symbol refers to a cell-common (or cell-specific) flexible symbol, and a U symbol refers to a cell-common (or cell-specific) UL symbol.

Table 4 shows $N_{gap}$. In the case of PRACH preamble format B4, $N_{gap}$ may be 0.

[Table 4]

| Preamble SCS | $N_{gap}$ |
|---|---|
| 1.25 kHz or 5 kHz | 0 |
| 15 kHz or 30 kHz or 60 kHz or 120 kHz | 2 |

According to the disclosure of this specification, multiple subbands may be semi-statically configured or dynamically indicated to a UE in the frequency domain for a downlink/flexible slot or symbol(s) semi-statically configured or dynamically indicated by a base station. Here, the multiple subbands may include at least one UL subband, and may include, as another example, at least one DL subband and at least one UL subband. In this case, in addition to the above method, according to one example of the present disclosure, the UE may determine a valid RO in the slot or symbol(s) as follows.

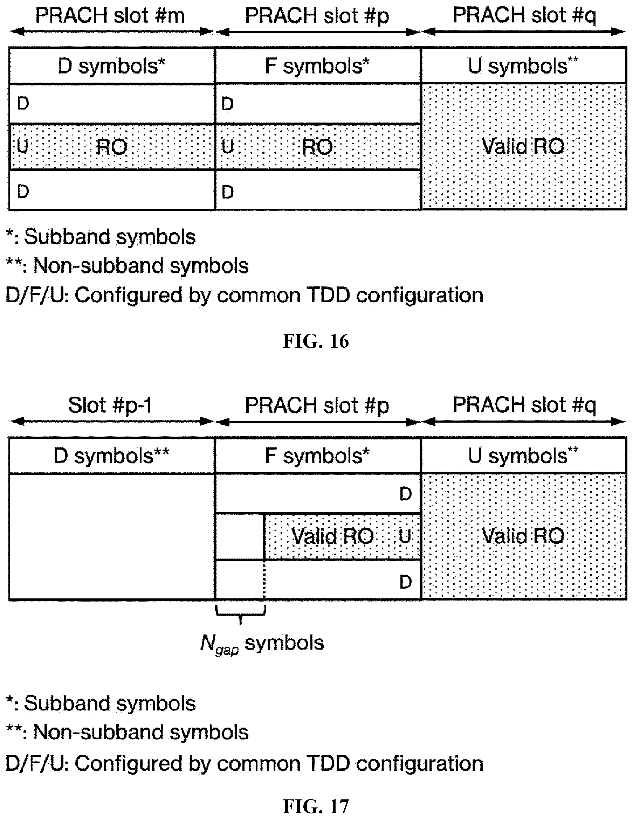

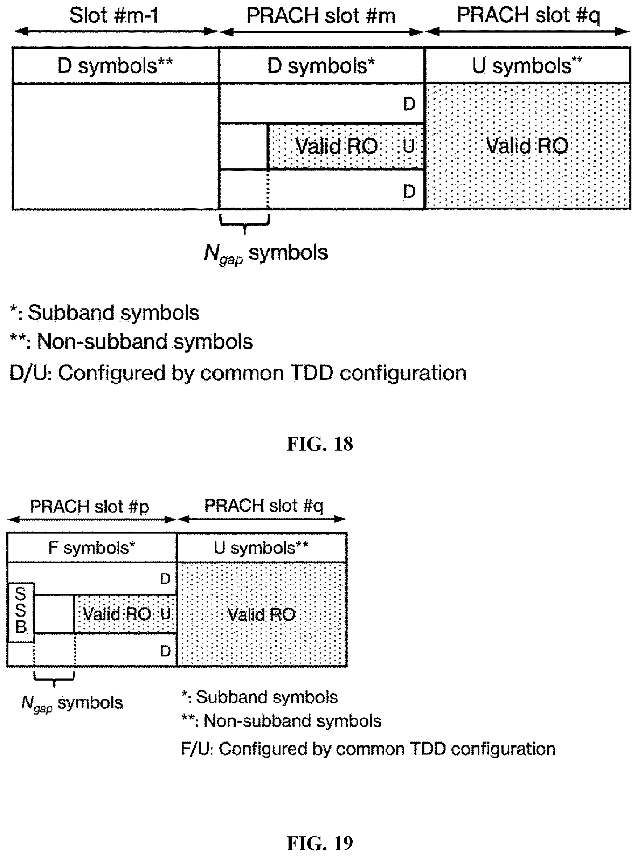

- When tdd-UL-DL-ConfigurationCommon is not configured for the UE:
  An RO within a PRACH slot may be valid when the RO is within an uplink subband, and the RO does not precede an SS/PBCH block within the PRACH slot in the time domain, and starts at least $N_{gap}$ symbols after a last SS/PBCH block reception symbol. Here, the last SS/PBCH block reception symbol refers to the last reception symbol of a last SS/PBCH block before the RO.
- When tdd-UL-DL-ConfigurationCommon is configured for the UE (FIGS. 16 to 19):
  When an RO within a PRACH slot is on a UL symbol(s), the RO may be valid (FIG. 16). When an RO within a PRACH slot is within a UL subband (FIG. 16), and the RO starts at least $N_{gap}$ symbols after a last DL symbol without preceding an SS/PBCH block within the PRACH slot in the time domain (FIGS. 17-18), and starts at least $N_{gap}$ symbols after a last SS/PBCH block reception symbol (FIG. 19), the RO may be valid. Since UL transmission is allowed in a UL subband, the last DL symbol is limited to a DL symbol for which the UL subband is not configured or indicated (i.e., a non-subband symbol). That is, a subband symbol is not included in the last DL symbol. Referring to FIGS. 17 and 18, the last DL symbol refers to a last DL symbol (a last symbol in slot #p-1 or a last symbol in slot #m-1) before the RO in a DL symbol set configured by the tdd-UL-DL-ConfigurationCommon, excluding the symbol(s) for which a UL subband is configured.

In FIGS. 16 to 19, m, p, and q represent slot indices. m, p, and q may be defined according to the PRACH slot configuration and may be configured continuously or discontinuously.

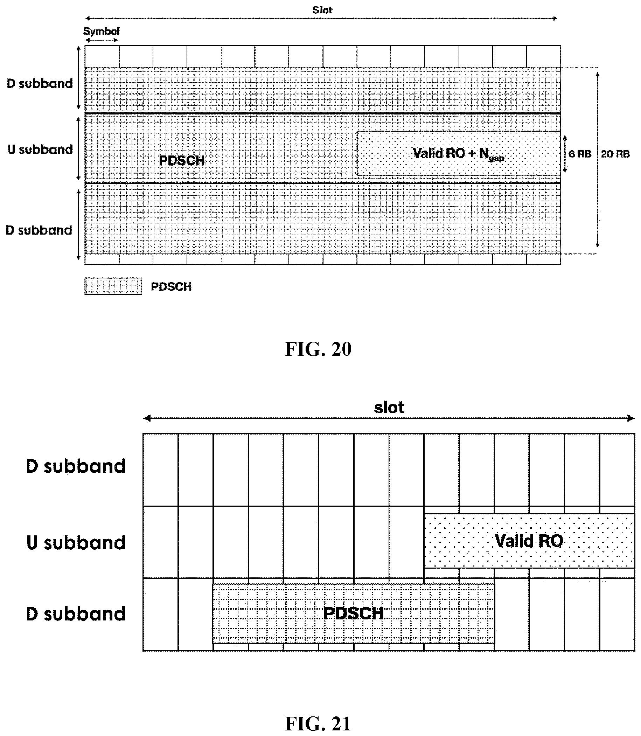

Based on a valid RO (or based on whether an RO is valid), the UE may perform UL transmission or DL reception. For example, the UE may perform PRACH transmission in a valid RO. Furthermore, when a valid RO (including a gap symbol) and downlink reception (e.g., PDSCH reception) overlap in the time domain, either PRACH transmission or DL reception by the UE may be restricted according to the disclosure of the present disclosure. This will be described below with reference to FIGS. 20 to 23. On the one hand, the UE may not perform PRACH transmission in an invalid RO. Furthermore, downlink reception by the UE is not restricted by an invalid RO.

Multiple subbands may be semi-statically configured or dynamically indicated to a UE in the frequency domain for a downlink/flexible slot or symbol(s) semi-statically configured or dynamically indicated by a base station. In this case, a resource, configured or indicated to receive a DL signal/channel, and a valid RO may overlap in the same symbol(s). A UE that supports only half duplex may be capable of performing only either DL reception or UL transmission in the same symbol, and the UE may not receive (e.g., skip reception of) a DL signal/channel (e.g., PDCCH, PDSCH, or CSI-RS) in (i) a valid RO and (ii) $N_{gap}$ symbols before the valid RO. On the other hand, when an RO overlapping a DL signal/channel is invalid, the DL signal/channel may be received normally.

For example, referring to FIG. 20, the UE may be configured or indicated to receive a PDSCH including symbols that overlap the six symbols corresponding to (i) a valid RO and (ii) $N_{gap}$ symbols before the valid RO. In this case, to protect PRACH transmission in the valid RO, the UE may not receive the PDSCH. On the other hand, when there is no actual PRACH transmission in a valid RO, the UE not receiving PDSCHs may reduce downlink coverage by not receiving PDSCHs even though resources configured or indicated to receive PDSCHs in that slot are available. Hereinafter, a UE operation to address this is proposed as follows. Hereinafter, a valid RO may include $N_{gap}$ symbols. That is, a valid RO may be {$N_{gap}$ symbols + RO}. For the $N_{gap}$ symbols, reference may be made to Table 4.

1) PDSCH (or SPS PDSCH) vs valid RO (FIGS. 20 to 23)

Multiple subbands may be configured or indicated to a UE in the frequency domain for a downlink/flexible slot or symbol(s) semi-statically configured or dynamically indicated. Furthermore, the UE may be indicated to receive a PDSCH via a DCI format (e.g., DCI format 1_0, 1_1, or 1_2) for DL scheduling in a corresponding slot or symbol(s) (i.e., subband slot/symbol). In addition, the UE may be configured to receive a semi-persistent scheduling (SPS) PDSCH via a higher layer (e.g., RRC) in the corresponding slot or symbol(s) (i.e., subband slot/symbol). When the PDSCH (or the SPS PDSCH) and the valid RO overlap in the same symbol in the corresponding slot or symbol(s), the UE operation is as follows.

According to a first embodiment, (a) when there is no actual PRACH transmission, a PDSCH (or SPS PDSCH) may be received, and (b) when there is actual PRACH transmission, a PRACH may be transmitted and the PDSCH may not be received. In the first embodiment, to address the above problem, at least when there is no actual PRACH transmission, the PDSCH (or SPS PDSCH) may be received, thereby preventing a decrease in downlink coverage.

According to a second embodiment, (a) when there is no actual PRACH transmission, a PDSCH (or SPS PDSCH) may be received, and (b) when there is actual PRACH transmission, a PRACH may be transmitted and the PDSCH (or SPS PDSCH) may be rate-matched and received. For example, referring to FIG. 20, a PDSCH (or SPS PDSCH) is indicated to be received at 14 symbols * 20 RBs, a valid RO is determined to be 6 symbols * 6 RBs, and the resource, indicated to receive the PDSCH (or SPS PDSCH), may include all valid ROs. In this case, the UE may rate-match and receive the PDSCH (or SPS PDSCH) by 6 symbols * 6 RBs, which overlap a valid RO, among the 14 symbols * 20 RBs indicated for PDSCH (or SPS PDSCH) reception, and transmit a PRACH in the valid RO. In the second embodiment, even if there is actual PRACH transmission in the overlapping symbols, the UE may rate-match and receive the PDSCH (or SPS PDSCH) in resources where downlink reception is possible. Thus, it is possible to prevent a decrease in downlink coverage.

The first embodiment or the second embodiment may be applied only to PRACH transmission configured/initiated by a higher layer (e.g., medium access control (MAC)). That is, the UE may not expect to detect DCI indicating reception of a PDSCH (or SPS PDSCH) and to detect DCI indicating transmission of a PRACH in the same symbol.

Referring to FIG. 21, a UE may be configured or indicated by the base station to receive a PDSCH in eight symbols, and may determine six symbols as a valid RO. In this case, the valid RO and the PDSCH reception may not overlap in the frequency domain, but may overlap in the time domain (i.e., two symbols). In this case, the UE may operate differently depending on whether the PDSCH reception is configured by a higher layer (e.g., radio resource control (RRC)) or indicated by DCI. Here, the PDSCH reception configured by the higher layer includes SPS PDSCH reception.

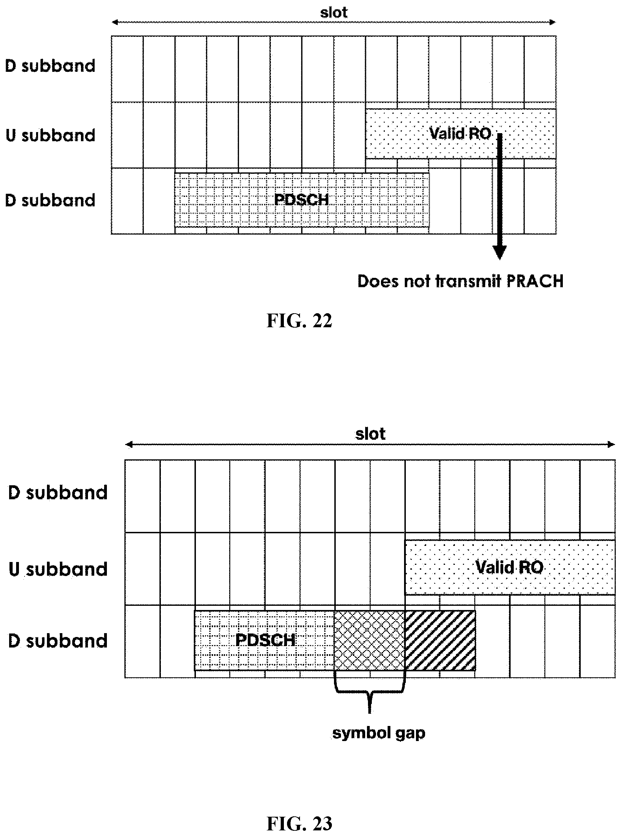

According to one embodiment, when PDSCH reception is indicated through a DCI format (e.g., DCI format 1_0, 1_1, or 1_2) for DL scheduling, the UE may receive a PDSCH (i.e., prioritize the PDSCH reception). Referring to FIG. 22, the UE may be indicated to receive a PDSCH in eight symbols within a downlink subband, and may determine a valid RO to be six symbols. In this case, the UE may receive the PDSCH in the eight symbols indicated by DCI, and may not transmit a PRACH in the valid RO. This implies that, at least when the UE is indicated to receive downlink by the base station through the DCI, the UE may determine to prioritize downlink reception for downlink coverage and not transmit the PRACH. On the other hand, unlike the UE that supports half-duplex communication on a subband, the base station supports full-duplex communication. Therefore, as shown in FIG. 22, even when the PRACH transmission by a UE in a valid RO in a subband is limited by the PDSCH reception by the UE, the base station supporting a full duplex operation may transmit a PDSCH to the UE in the valid RO while receiving a PRACH from another UE.

According to another embodiment, when a UE is configured to receive a PDSCH by a higher layer (e.g., RRC), the UE may rate-match and receive the PDSCH, and may perform PRACH transmission in a valid RO. For example, the UE may rate-match and receive the PDSCH in symbols, except for symbols overlapping the valid RO and symbols corresponding to RxTxSwitchingGap, i.e., the gap between downlink reception and uplink transmission ($N_{gap,Rx-Tx}$), and/or the gap between uplink transmission and downlink reception ($N_{gap,Tx-Rx}$), which is configured differently depending on subcarrier spacing (SCS). Here, the values of $N_{gap,Rx-Tx}$ and $N_{gap,Tx-Rx}$ may each be defined independently or may be defined as the same value. For convenience, the switching gap is generalized and referred to as $N_{gap}$. $N_{gap}$ may refer to $N_{gap,Rx-Tx}$ and/or $N_{gap,Tx-Rx}$. Referring to FIG. 23, the UE may be configured by a higher layer (e.g., RRC) to receive a PDSCH in eight symbols within a downlink subband, and may determine a valid RO to be six symbols. In this case, the UE may receive the PDSCH with a length of four symbols by rate-matching the PDSCH with respect to two symbols overlapping the valid RO and $N_{gap}$ =2 (i.e., set to $N_{gap,Rx-Tx}$=2, and not limited to this) symbols before the valid RO for PDSCH reception. In addition, the UE may transmit PRACH even in the valid RO. This is a method that prevents the decrease in downlink coverage by rate-matching and receiving the PDSCH on resources where downlink reception is possible, and also allows the UE to perform PRACH transmission when the UE wants to perform the transmission in an RO.

2) CSI-RS vs valid RO

Multiple subbands may be configured or indicated to a UE in the frequency domain for a downlink/flexible slot or symbol(s) semi-statically configured or dynamically indicated. Furthermore, the UE may be indicated to receive a CSI-RS via a DCI format (e.g., DCI format 1_0, 1_1, or 1_2) for DL scheduling on a corresponding slot or symbol(s) (i.e., a subband slot/symbol). When a CSI-RS and a valid RO overlap in the same symbol in the slot or symbol(s), a UE operation is as follows.

According to a first embodiment, (a) when there is no actual PRACH transmission, the CSI-RS may be received and (b) when there is actual PRACH transmission, a PRACH may be transmitted and a CSI-RS may not be received. In the first embodiment, to solve the above problem, at least when there is no actual PRACH transmission, a CSI-RS may be received, thereby preventing a decrease in downlink coverage.

The first embodiment may be applied only when CSI-RS reception is indicated by DCI and PRACH transmission is configured from a higher layer (e.g., MAC). That is, the UE may not expect to receive a CSI-RS and transmit a PRACH in the same symbol from the higher layer.

3) CORESET vs valid RO

Multiple subbands may be configured or indicated to a UE in the frequency domain for a downlink/flexible slot or symbol(s) semi-statically configured or dynamically indicated. Furthermore, a CORESET for monitoring PDCCH on the corresponding slot or symbol(s) (i.e., subband slot/symbol) may be configured for the UE. When a CORESET and a valid RO overlap in the same symbol in the corresponding slot or symbol(s), a UE operation is as follows.

According to a first embodiment, (a) when there is no actual PRACH transmission, a PDCCH may be monitored, and (b) when there is actual PRACH transmission, a PRACH may be transmitted and a PDCCH may not be monitored. In the first embodiment, to solve the above problem, at least when there is no actual PRACH transmission, the PDCCH may be monitored, thereby preventing a decrease in downlink coverage. Furthermore, the PDCCH contains control information, such as resource allocation for the UE, and thus may be prioritized.

The first embodiment may be applied only when PRACH transmission is configured from a higher layer (e.g., MAC). That is, when the UE is indicated to transmit a PRACH, through DCI, on a symbol in which a CORESET is configured, the UE may not monitor a PDCCH regardless of whether the PRACH is actually transmitted in the symbol.

The above-described conflict situation between a valid RO and a CORESET, a PDSCH, or a CSI-RS may not be applied when the UE is transmitting a PRACH for initial cell access (i.e., before RRC connection). That is, in the collision situation, a UE before RRC connection may not monitor PDCCH or receive a PDSCH or a CSI-RS. For example, the UE before RRC connection may perform an operation according to a legacy NR system.

The method and system of the present disclosure are described in relation to specific embodiments, but configuration elements, a part of or the entirety of operations of the present disclosure may be implemented using a computer system having a general-purpose hardware architecture.

The foregoing descriptions of the present disclosure are for illustration purposes, and those skilled in the art, to which the present disclosure belongs, will be able to understand that modification to other specific forms can be easily achieved without changing the technical spirit or essential features of the present disclosure. Therefore, it should be understood that the embodiments described above are illustrative and are not restrictive in all respects. For example, each element described as one type may be implemented in a distributed manner, and similarly, elements described as being distributed may also be implemented in a combined form.

The scope of the present disclosure is indicated by claims to be described hereinafter rather than the detailed description, and all changes or modifications derived from the meaning and scope of the claims and their equivalent concepts should be interpreted as being included in the scope of the present disclosure.

**Claims**

1. A user equipment used in a wireless communication system, the user equipment comprising:

    a communication module; and

a processor configured to control the communication module,
wherein the processor is configured to:

receive a cell-specific radio resource control (RRC) signal regarding a slot format, the slot format comprising information about a type of symbol, and the type of symbol comprising at least one of a downlink (DL) symbol, a flexible symbol, and an uplink (UL) symbol;
determine whether a RACH occasion (RO) in a physical random-access channel (PRACH) slot is valid, the determination comprising determining whether the RO is valid based on whether the RO starts at least $N_{gap}$ symbols after a last DL symbol; and
perform UL transmission or DL reception based on whether the RO is valid,
wherein in at least one slot, multiple subbands are configured within one frequency band, the multiple subbands comprising a DL subband and a UL subband, and
wherein in case that the RO is present in the UL subband, the last DL symbol is determined based on DL symbols configured by the cell-specific RRC signal, excluding symbols in which the UL subband is configured.

2. The user equipment of claim 1, wherein the cell-specific RRC signal comprises common time division duplex (TDD) UL-DL configuration information.

3. The user equipment of claim 1, wherein the determination comprises determining that the RO is valid in case that the RO is within the UL subband, the RO does not precede a synchronization signal/physical broadcast channel (SS/PBCH) block within the PRACH slot in a time domain, starts at least $N_{gap}$ symbols after the last DL symbol, and starts at least $N_{gap}$ symbols after a last SS/PBCH block reception symbol.

4. The user equipment of claim 1, wherein the determination comprises determining that the RO is valid in case that the RO is present on a UL symbol set configured by the cell-specific RRC signal.

5. The user equipment of claim 1, wherein $N_{gap}$ is determined based on subcarrier spacing (SCS) of the PRACH.

6. The user equipment of claim 5, wherein $N_{gap}$ is determined as follows:

- in case that the SCS of the PRACH is 1.25 kHz or 5 kHz, $N_{gap}$ = 0; and
- in case that the SCS of the PRACH is 15 kHz, 30 kHz, 60 kHz, or 120 kHz, $N_{gap}$ = 2.

7. The user equipment of claim 1, wherein the PRACH is transmitted in the RO in case that the RO is valid.

8. The user equipment of claim 1, wherein in case that

(a) the RO is present on the UL subband,
(b) the RO is valid, and
(c) a physical downlink shared channel (PDSCH) scheduled for the user equipment overlaps at least one of the $N_{gap}$ symbols and the RO in a time domain, and

wherein reception of the PDSCH is determined based on whether the PDSCH has been scheduled by downlink control information (DCI) or a higher layer.

9. The user equipment of claim 8, wherein in case that

(a) the RO is present on the UL subband,
(b) the RO is valid,
(c) a physical downlink shared channel (PDSCH) scheduled for the user equipment overlaps at least one of the $N_{gap}$ symbols and the RO in a time domain, and
(d) the PDSCH is scheduled by the DCI,
- the PDSCH is received normally, and
- PRACH transmission is not allowed in the RO.

10. The user equipment of claim 8, wherein in case that

(a) the RO is present on the UL subband,
(b) the RO is valid,
(c) a PDSCH scheduled for the user equipment overlaps at least one of the $N_{gap}$ symbols and the RO in a time domain, and
(d) the PDSCH is scheduled by the higher layer,
- the PDSCH is rate-matched and received based on a resource overlapped thereby in the time domain, and
- PRACH transmission is allowed in the RO.

11. A method used by a user equipment in a wireless communication system, the method comprising:

receiving a cell-specific radio resource control (RRC) signal regarding a slot format, the slot format comprising information about a type of symbol, and the type of symbol comprising at least one of a downlink (DL) symbol, a flexible symbol, and an uplink (UL) symbol;
determining whether a RACH occasion (RO) in a physical random-access channel (PRACH) slot is valid, the determination comprising determining whether the RO is valid based on whether the RO starts at least $N_{gap}$ symbols after a last DL symbol; and
performing UL transmission or DL reception based on whether the RO is valid,
wherein in at least one slot, multiple subbands are configured within one frequency band, the multiple subbands comprising a DL subband and a UL subband, and
wherein in case that the RO is present in the UL subband, the last DL symbol is determined based on DL symbols configured by the cell-specific RRC signal, excluding symbols in which the UL subband is configured.

12. The method of claim 11, wherein the cell-specific RRC signal comprises common time division duplex (TDD) UL-DL configuration information.

13. The method of claim 11, wherein the determination comprises determining that the RO is valid in case that the RO is within the UL subband, the RO does not precede a synchronization signal/physical broadcast channel (SS/PBCH) block within the PRACH slot in a time domain, starts at least $N_{gap}$ symbols after the last DL symbol, and starts at least $N_{gap}$ symbols after a last SS/PBCH block reception symbol.

14. The method of claim 11, wherein the determination comprises determining that the RO is valid in case that the RO is present on a UL symbol set configured by the common RRC signal.

15. The method of claim 11, wherein $N_{gap}$ is determined based on subcarrier spacing (SCS) of the PRACH.

16. The method of claim 15, wherein $N_{gap}$ is determined as follows:

- in case that the SCS of the PRACH is 1.25 kHz or 5 kHz, $N_{gap} = 0$; and
- in case that the SCS of the PRACH is 15 kHz, 30 kHz, 60 kHz, or 120 kHz, $N_{gap} = 2$.

17. The method of claim 11, wherein the PRACH is transmitted in the RO in case that the RO is valid.

18. The method of claim 11, wherein in case that

(a) the RO is present on the UL subband,
(b) the RO is valid, and
(c) a physical downlink shared channel (PDSCH) scheduled for the user equipment overlaps at least one of the $N_{gap}$ symbols and the RO in a time domain,
- reception of the PDSCH is determined based on whether the PDSCH has been scheduled by downlink control information (DCI) or a higher layer.

19. The method of claim 18, wherein in case that

(a) the RO is present on the UL subband,
(b) the RO is valid,
(c) a physical downlink shared channel (PDSCH) scheduled for the user equipment overlaps at least one of the $N_{gap}$ symbols and the RO in a time domain, and
(d) the PDSCH is scheduled by the DCI,

- the PDSCH is received normally, and
- PRACH transmission is not allowed in the RO.

**20.** The method of claim 8, wherein in case that

(a) the RO is present on the UL subband,
(b) the RO is valid,
(c) a PDSCH scheduled for the user equipment overlaps at least one of the $N_{gap}$ symbols and the RO in a time domain, and
(d) the PDSCH is scheduled by the higher layer,
- the PDSCH is rate-matched and received based on a resource overlapped thereby in the time domain, and
- PRACH transmission is allowed in the RO.

1 radio frame, $T_{\mathrm{f}} = \left(\Delta f_{\mathrm{max}} N_{\mathrm{f}} / 100\right) \cdot T_{\mathrm{c}} = 10\,\mathrm{ms}$

1 sub-frame, $T_{\mathrm{sf}} = \left(\Delta f_{\mathrm{max}} N_{\mathrm{f}} / 1000\right) \cdot T_{\mathrm{c}} = 1\,\mathrm{ms}$

| #0 | #1 | #2 | #3 | ... | #8 | #9 |
|----|----|----|----|-----|----|----|

| slot#0 | slot#1 | slot#2 | slot#3 | ... | #slot#($2^{\mu}$-2) | slot#($2^{\mu}$-1) |
|--------|--------|--------|--------|-----|--------------------|--------------------|

1 slot, $T_{\mathrm{slot}} = \left(\Delta f_{\mathrm{max}} N_{\mathrm{f}} / 1000\right) \cdot T_{\mathrm{c}} \cdot 2^{-\mu} = 2^{-\mu}\,\mathrm{ms}$

**FIG. 1**

**FIG. 2**

**FIG. 3**

## FIG. 4a

## FIG. 4b

## FIG. 5a

## FIG. 5b

**FIG. 6**

FIG. 7

**FIG. 8**

(a) Single CC

(b) Multiple CC

## FIG. 9

## FIG. 10

**FIG. 11**

| D slot (n1) | D/F slot (n2) | D/F slot (n3) | U slot (n4) |
|---|---|---|---|
|  |  |  |  |

\* Slot formats are configured by TDD configuration or SFI

Subband configuration/indication

Frequency
band
(e.g., RBs)

| D slot (n1) | D/F slot (n2) | D/F slot (n3) | U slot (n4) |
|---|---|---|---|
|  | U subband | U subband |  |

**FIG. 12**

**D slot by TDD configuration or SFI**

CSI-RS

Dynamic subband format indication

**D slot by TDD configuration or SFI**

**D subband**

**U subband**  CG PUSCH Type 1

**D subband**  CSI-RS

**FIG. 13**

PRACH slot

| | | | | | | | | | | | | | | | |
|---|---|---|---|---|---|---|---|---|---|---|---|---|---|---|---|

RBs

| RO #4 | RO #9 |
|---|---|
| RO #3 | RO #8 |
| RO #2 | RO #7 |
| RO #1 | RO #6 |
| RO #0 | RO #5 |

| | | | | | | | | | | | | | | | |
|---|---|---|---|---|---|---|---|---|---|---|---|---|---|---|---|

Symbol

**FIG. 14**

Slot #p-1     PRACH slot #p     PRACH slot #q

(a)

| D symbols | F symbols | U symbols |
|---|---|---|
| | Valid RO | Valid RO |

$N_{gap}$ symbols

PRACH slot #p     PRACH slot #q

(b)

| F symbols | U symbols |
|---|---|
| SSB   Valid RO | Valid RO |

$N_{gap}$ symbols

**FIG. 15**

| PRACH slot #m | PRACH slot #p | PRACH slot #q |
|---|---|---|
| D symbols* | F symbols* | U symbols** |
| D | D | |
| U RO | U RO | Valid RO |
| D | D | |

*: Subband symbols
**: Non-subband symbols
D/F/U: Configured by common TDD configuration

**FIG. 16**

| Slot #p-1 | PRACH slot #p | PRACH slot #q |
|---|---|---|
| D symbols** | F symbols* | U symbols** |
| | D | |
| | Valid RO U | Valid RO |
| | D | |

$N_{gap}$ symbols

*: Subband symbols
**: Non-subband symbols
D/F/U: Configured by common TDD configuration

**FIG. 17**

| Slot #m-1 | PRACH slot #m | PRACH slot #q |
|---|---|---|
| D symbols** | D symbols* | U symbols** |

(cell: D)
(cell: Valid RO U)  (U symbols column: Valid RO)
(cell: D)

$N_{gap}$ symbols

*: Subband symbols
**: Non-subband symbols
D/U: Configured by common TDD configuration

**FIG. 18**

| PRACH slot #p | PRACH slot #q |
|---|---|
| F symbols* | U symbols** |

S
S
B

(cell: D)
(cell: Valid RO U)  (U symbols column: Valid RO)
(cell: D)

$N_{gap}$ symbols

*: Subband symbols
**: Non-subband symbols
F/U: Configured by common TDD configuration

**FIG. 19**

**FIG. 20**

**FIG. 21**

FIG. 22

FIG. 23

## INTERNATIONAL SEARCH REPORT

| | International application No. |
|---|---|
| | **PCT/KR2023/015220** |

### A. CLASSIFICATION OF SUBJECT MATTER

**H04L 5/14**(2006.01)i; **H04L 5/00**(2006.01)i; **H04W 72/04**(2009.01)i; **H04W 72/23**(2023.01)i; **H04W 72/542**(2023.01)i; **H04W 72/53**(2023.01)i; **H04W 72/12**(2009.01)i

According to International Patent Classification (IPC) or to both national classification and IPC

### B. FIELDS SEARCHED

Minimum documentation searched (classification system followed by classification symbols)

H04L 5/14(2006.01); H04W 72/04(2009.01); H04W 72/12(2009.01); H04W 72/14(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬롯 포맷(slot format), 셀-특정 RRC 신호(cellspecific RRC signal), RO(RACH occasion), 유효(valid), Ngap, DL 서브밴드(DL subband), UL 서브밴드(UL subband)

### C. DOCUMENTS CONSIDERED TO BE RELEVANT

| Category* | Citation of document, with indication, where appropriate, of the relevant passages | Relevant to claim No. |
|---|---|---|
| A | VIVO. Discussion on collision handling for PRACH transmission. R1-2102935, 3GPP TSG RAN WG1 #104b-e, e-Meeting. 06 April 2021.<br>See pages 3-4. | 1-20 |
| A | US 2021-0112603 A1 (QUALCOMM INCORPORATED) 15 April 2021 (2021-04-15)<br>See paragraphs [0087]-[0094]; and figure 9. | 1-20 |
| A | US 2021-0051720 A1 (QUALCOMM INCORPORATED) 18 February 2021 (2021-02-18)<br>See paragraphs [0158]-[0159]; and figure 14. | 1-20 |
| A | US 2021-0345342 A1 (QUALCOMM INCORPORATED) 04 November 2021 (2021-11-04)<br>See paragraphs [0132]-[0136]; and figure 13. | 1-20 |
| A | WO 2021-049912 A1 (SAMSUNG ELECTRONICS CO., LTD.) 18 March 2021 (2021-03-18)<br>See claims 1-8. | 1-20 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | International application No. | |
|---|---|---|---|
| Information on patent family members | | **PCT/KR2023/015220** | |

| Patent document cited in search report | | | Publication date (day/month/year) | Patent family member(s) | | | Publication date (day/month/year) |
|---|---|---|---|---|---|---|---|
| US | 2021-0112603 | A1 | 15 April 2021 | BR | 112022006765 | A2 | 28 June 2022 |
| | | | | CN | 114667705 | A | 24 June 2022 |
| | | | | EP | 4046454 | A1 | 24 August 2022 |
| | | | | KR | 10-2022-0082821 | A | 17 June 2022 |
| | | | | TW | 202123764 | A | 16 June 2021 |
| | | | | WO | 2021-076516 | A1 | 22 April 2021 |
| US | 2021-0051720 | A1 | 18 February 2021 | CN | 114303436 | A | 08 April 2022 |
| | | | | EP | 4014646 | A1 | 22 June 2022 |
| | | | | US | 11638302 | B2 | 25 April 2023 |
| | | | | US | 2023-0328787 | A1 | 12 October 2023 |
| | | | | WO | 2021-030389 | A1 | 18 February 2021 |
| US | 2021-0345342 | A1 | 04 November 2021 | US | 11765756 | B2 | 19 September 2023 |
| | | | | WO | 2021-222628 | A2 | 04 November 2021 |
| | | | | WO | 2021-222628 | A3 | 10 February 2022 |
| WO | 2021-049912 | A1 | 18 March 2021 | CN | 113287337 | A | 20 August 2021 |
| | | | | EP | 3874881 | A1 | 08 September 2021 |
| | | | | US | 11737135 | B2 | 22 August 2023 |
| | | | | US | 2021-0084683 | A1 | 18 March 2021 |